(19) Europäisches Patentamt
European Patent Office
Office européen des brevets

(11) **EP 3 443 303 B1**

(12) **EUROPÄISCHE PATENTSCHRIFT**

(45) Veröffentlichungstag und Bekanntmachung des Hinweises auf die Patenterteilung:
**12.05.2021 Patentblatt 2021/19**

(51) Int Cl.:
***G01B 11/00*** *(2006.01)*   ***G01D 5/347*** *(2006.01)*
***G01D 5/38*** *(2006.01)*

(21) Anmeldenummer: **17713942.5**

(22) Anmeldetag: **28.03.2017**

(86) Internationale Anmeldenummer:
**PCT/EP2017/057252**

(87) Internationale Veröffentlichungsnummer:
**WO 2017/178223 (19.10.2017 Gazette 2017/42)**

(54) **POSITIONSMESSANORDNUNG UND VERFAHREN ZUM BETRIEB EINER POSITIONSMESSANORDNUNG**

POSITION MEASURING DEVICE AND METHOD FOR OPERATING SAID POSITION MEASURING DEVICE

DISPOSITIF DE MESURE DE POSITION ET PROCEDE DE FONCTIONNEMENT D'UN TEL DISPOSITIF DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2016 DE 102016206144**

(43) Veröffentlichungstag der Anmeldung:
**20.02.2019 Patentblatt 2019/08**

(73) Patentinhaber: **Dr. Johannes Heidenhain GmbH 83301 Traunreut (DE)**

(72) Erfinder:
• **HOLZAPFEL, Wolfgang 83119 Obing (DE)**
• **HUBER, Thomas 83301 Traunreut (DE)**
• **KÄLBERER, Thomas 86529 Schrobenhausen (DE)**
• **MUSCH, Bernhard 83368 St. Georgen (DE)**

(56) Entgegenhaltungen:
EP-A- 2 679 962       EP-A1- 2 679 962
GB-A- 1 482 076       GB-A- 1 482 076
JP-A- 2007 304 196    JP-A- 2007 304 196
US-A1- 2005 035 277   US-A1- 2005 035 277

**Beschreibung**

### GEBIET DER TECHNIK

Die vorliegende Erfindung betrifft eine Positionsmessanordnung sowie ein Verfahren zum Betrieb einer Positionsmessanordnung. Darüber ist die hochgenaue Bestimmung der Relativposition zweier zueinander beweglicher Objekte möglich.

### STAND DER TECHNIK

Eine gattungsgemäße Positionsmessanordnung ist etwa aus der EP 2 679 962 A1 der Anmelderin bekannt. Diese dient zur Bestimmung der Relativposition zweier Objekte, die entlang mindestens einer ersten Messrichtung zueinander beweglich angeordnet sind. Hierbei ist einerseits mindestens eine Maßverkörperung vorgesehen, die mit einem der beiden Objekte verbunden ist und mindestens eine Messteilung aufweist. Andererseits sind mindestens zwei Abtasteinheiten mit dem anderen der beiden Objekte verbunden und mit einem Abtastabstand beabstandet von der Maßverkörperung angeordnet. Die Abtasteinheiten umfassen jeweils optische Abtastelemente, die zur Ausbildung eines Abtaststrahlengangs dienen, um die Messteilung optisch abzutasten und darüber positionsabhängige Abtastsignale zu erzeugen.

Mit Hilfe einer derartigen Positionsmessanordnung kann beispielsweise in einer Halbleiter-Fertigungseinrichtung die Position eines beweglich angeordneten Präzisionstisches gegenüber einem demgegenüber stationären Maschinenrahmen hochgenau in ein oder mehreren räumlichen Freiheitsgraden bestimmt werden. Der Präzisionstisch einerseits und der Maschinenrahmen andererseits fungieren demnach hier als die beiden zueinander beweglichen Objekte der Positionsmessanordnung.

Im normalen hochgenauen Arbeitsbetrieb arbeiten die vorgesehenen Abtasteinheiten üblicherweise innerhalb des jeweils spezifizierten Arbeitsbereiches bezüglich der räumlichen Anordnung von Abtasteinheit und Maßverkörperung, beispielsweise also innerhalb des spezifizierten Arbeitsbereichs für den Abtastabstand. Neben dem hochgenauen Arbeitsbetrieb können jedoch noch weitere Betriebsmodi der jeweiligen Halbleiter-Fertigungseinrichtung vorgesehen sein, in denen ein deutlich vergrößerter Abtastabstand zwischen der Maßverkörperung und den Abtasteinheiten erforderlich ist und bei dem kein korrekter Betrieb der Abtasteinheiten und damit auch keine korrekte Erfassung der Position des Präzisionstisches über die Positionsmessanordnung mehr gewährleistet ist. Hierbei kann es sich z.B. um einen Einrichtbetrieb handeln, in dem das zu prozessierende Werkstück in Form eines Halbleiter-Wafers gewechselt wird.

### ZUSAMMENFASSUNG DER ERFINDUNG

Der vorliegenden Erfindung liegt die Aufgabe zugrunde, eine Positionsmessanordnung sowie ein Verfahren zu deren Betrieb anzugeben, um auch im Fall des Betriebs außerhalb vorgegebener Arbeitsbereiche bezüglich der räumlichen Anordnung von Abtasteinheit und Maßverkörperung eine korrekte Positionsbestimmung aufrecht zu erhalten.

Diese Aufgabe wird erfindungsgemäß durch eine Positionsmessanordnung mit den Merkmalen des Anspruchs 1 sowie durch ein Verfahren zum Betrieb einer Positionsmessanordnung mit den Merkmalen des Anspruchs 10 gelöst.

Vorteilhafte Ausführungen der erfindungsgemäßen Positionsmessanordnung sowie des erfindungsgemäßen Verfahrens ergeben sich aus den Maßnahmen, die in den jeweils abhängigen Ansprüchen aufgeführt sind,

Die erfindungsgemäße Positionsmessanordnung dient zur Bestimmung der Relativposition zweier Objekte, die entlang mindestens einer Messrichtung zueinander beweglich angeordnet sind. Einerseits ist mindestens eine Maßverkörperung vorgesehen, die mit einem der beiden Objekte verbunden ist und mindestens eine Messteilung aufweist. Andererseits sind mindestens zwei Abtasteinheiten vorgesehen, die mit dem anderen der beiden Objekte verbunden und in einer Abstandsrichtung mit einem Abtastabstand beabstandet von der Maßverkörperung angeordnet sind. Die Abtasteinheiten umfassen jeweils optische Abtastelemente, die zur Ausbildung eines Abtaststrahlengangs dienen, um die Messteilung optisch abzutasten und darüber positionsabhängige Abtastsignale zu erzeugen. Mindestens einer Abtasteinheit ist mindestens ein in den Abtaststrahlengang ein- oder auswechselbares optisches Ausgleichselement zugeordnet, so dass durch Ein- oder Auswechseln des Ausgleichselements eine Veränderung des Arbeitsbereichs bewirkbar ist, der bezüglich der räumlichen Anordnung von Abtasteinheit und Maßverkörperung gegeben ist und in dem die Abtasteinheit positionsabhängige Abtastsignale erzeugen kann. Hierbei ist die Geometrie des Ausgleichselements und dessen Brechungsindex derart gewählt, dass sich mindestens einer der modifizierten Arbeitsbereiche mit dem Arbeitsbereich mindestens einer weiteren Abtasteinheit in einem Übergabebereich überlappt.

Vorzugsweise ist das Ausgleichselement derart ausgebildet, dass durch Ein- oder Auswechseln des Ausgleichselements eine Veränderung des Arbeitsbereichs

- des Abtastabstands zwischen Maßverkörperung und Abtasteinheit und/oder

- der winkelmäßigen Orientierung zwischen Maßverkörperung und Abtasteinheit und/oder
- des Verfahrbereichs zwischen Maßverkörperung und Abtasteinheit bewirkbar ist.

Es ist möglich, dass als Ausgleichselement mindestens eines der nachfolgenden Elemente fungiert:

- transparente planparallele Platte
- transparente, keilförmige Platte
- transparente, schräggestellte planparallele Platte
- transparente, mehrstufige planparallele Platte
- transparente, mehrstufige Platte mit unterschiedlichen Keilwinkeln
- diffraktives Element
- mehrteiliges System aus einzelnen transparenten planparallelen oder keilförmigen Platten oder schräggestellten planparallelen Platten oder diffraktiven Elementen

Desweiteren kann das Ausgleichselement mehrere Teil-Ausgleichselemente umfassen,
**[0012]** Dabei kann das Ausgleichselement als integraler Körper, bestehend aus mehreren Teil-Ausgleichselementen ausgebildet sein.
In einer möglichen Ausführungsform ist die Messteilung als zweidimensionales Kreuzgitter ausgebildet, welches eine erste periodische Messteilung umfasst, die sich entlang einer ersten Messrichtung erstreckt und eine zweite periodische Messteilung umfasst, die sich entlang einer zweiten Messrichtung erstreckt, die senkrecht zur ersten Messrichtung orientiert ist.
Es ist desweiteren möglich, dass

- ein erster Satz mit mehreren Abtasteinheiten vorgesehen ist, die zur Erfassung mehrerer Bewegungsfreiheitsgrade der beiden beweglichen Objekte ausgebildet sind und
- ein zweiter Satz mit mehreren Abtasteinheiten vorgesehen ist, die zur Erfassung der gleichen Bewegungsfreiheitsgrade der beiden beweglichen Objekte wie der erste Satz von Abtasteinheiten ausgebildet sind,
- wobei in die Abtaststrahlengänge mindestens eines Satzes von Abtasteinheiten ein oder mehrere Ausgleichselemente ein- oder auswechselbar sind,

Hierbei kann der Abtaststrahlengang jeder Abtasteinheit derart ausgebildet sein, dass darüber gleichzeitig die Erzeugung positionsabhängiger Abtastsignale entlang der Abstandsrichtung sowie entlang mindestens einer weiteren Messrichtung erfolgt.
Ferner können dabei ein oder mehrere Ausgleichselemente mittels eines einzigen Aktuators gemeinsam in die Abtaststrahlengänge eines Satzes von Abtasteinheiten ein- und auswechselbar sein.
Das erfindungsgemäße Verfahren zum Betrieb einer Positionsmessanordnung dient zur Bestimmung der Relativposition zweier Objekte, die entlang mindestens einer Messrichtung zueinander beweglich angeordnet sind. Hierbei umfasst die Positionsmessanordnung mindestens eine Maßverkörperung, die mit einem der beiden Objekte verbunden ist und mindestens eine Messteilung aufweist. Ferner sind mindestens zwei Abtasteinheiten vorgesehen, die mit dem anderen der beiden Objekte verbunden und mit einem Abtastabstand beabstandet von der Maßverkörperung angeordnet sind. Die Abtasteinheiten weisen jeweils optische Abtastelemente auf, über die ein Abtaststrahlengang zur optischen Abtastung der Messteilung und der Erzeugung positionsabhängiger Abtastsignale ausgebildet wird. In den Abtaststrahlengang mindestens einer Abtasteinheit wird zeitweise mindestens ein optisches Ausgleichselement ein- oder ausgewechselt, so dass durch Ein- oder Auswechseln des Ausgleichselements eine Veränderung des Arbeitsbereichs bewirkt wird, der bezüglich der räumlichen Anordnung von Abtasteinheit und Maßverkörperung gegeben ist und in dem die Abtasteinheit positionsabhängige Abtastsignale erzeugt.
Nach dem Ein- oder Auswechseln eines oder mehrerer optischer Ausgleichselemente

- überlappen die Arbeitsbereiche der dadurch modifizierten Abtasteinheiten mit den Arbeitsbereichen mindestens einer der unmodifizierten Abtasteinheiten in einem Übergabebereich,
- sind im Übergabebereich aus den positionsabhängigen Abtastsignalen der unmodifizierten Abtasteinheiten Positionsinformationen ableitbar, und
- werden die modifizierten Abtasteinheiten im Übergabebereich dahingehend initialisiert, dass deren positionsabhängige Abtastsignale innerhalb eines vorgegebenen Toleranzbereichs konsistent mit den Positionsinformationen aus den unmodifizierten Abtasteinheiten sind.

Es ist möglich, dass

- mehrere Abtasteinheiten in einem Abtastabstand von der Maßverkörperung angeordnet werden, in dem alle Abtasteinheiten korrekte positionsabhängige Abtastsignale erzeugen und
- dann in die Abtaststrahlengänge eines zweiten Satzes von Abtasteinheiten mindestens ein Ausgleichselement eingebracht wird, während ein erster Satz von Abtasteinheiten weiterhin unmodifiziert betrieben wird und
- daraufhin die Positionsbestimmung zunächst über den ersten Satz von Abtasteinheiten erfolgt und
- in einem Übergabebereich des Abtastabstands, in dem eine Erzeugung von positionsabhängigen Signalen mittels beider Sätze von Abtasteinheiten möglich ist, der zweite Satz von Abtasteinheiten initialisiert wird und
- nach dem weiteren Vergrößern des Abtastabstands und dem Verlassen des Übergabebereichs die Positionsbestimmung über den zweiten Satz von Abtasteinheiten erfolgt.

Es kann desweiteren vorgesehen sein, dass

- anschließend der Abtastabstand zwischen der Maßverkörperung und den Abtasteinheiten wieder verringert wird, wobei die Positionsbestimmung zunächst über den zweiten Satz von Abtasteinheiten erfolgt und
- im Übergabebereich des Abtastabstands der erste Satz von Abtasteinheiten initialisiert wird und dann
- die Positionsbestimmung wieder über den ersten Satz von Abtasteinheiten erfolgt und dann
- das mindestens eine Ausgleichselement aus dem Abtaststrahlengang des zweiten Satzes von Abtasteinheiten entfernt wird und dann
- der zweite Satz von Abtasteinheiten initialisiert wird.

Über die erfindungsgemäße Lösung kann nunmehr auch für den Fall eine korrekte Positionsbestimmung gewährleistet werden, wenn die Positionsmessanordnung in einem Arbeitsbereich bezüglich der räumlichen Anordnung von Abtasteinheit und Maßverkörperung betrieben wird, der ansonsten keine korrekte Positionsbestimmung ermöglichen würde.

Ein weiterer Vorteil der Erfindung besteht darin, dass die Information über die Nullpunkte der Positionszähler der inkremental arbeitenden Abtasteinheiten auch im erweiterten Arbeitsbereich nicht verloren geht. Die aus den Positionszählern berechneten bzw. abgeleiteten Positionen der Objekte bleiben durchgängig reproduzierbar.

Neben einem erweiterten Arbeitsbereich bezüglich des Abtastabstands zwischen Maßverkörperung und Abtasteinheiten können erfindungsgemäß auch erweiterte Arbeitsbereiche bezüglich der winkelmäßigen Orientierung von Maßverkörperung und Abtasteinheiten sowie bezüglich des Verfahrbereichs von Maßverkörperung und Abtasteinheiten realisiert werden.

Weitere Einzelheiten und Vorteile der vorliegenden Erfindung seien anhand der nachfolgenden Beschreibung von Ausführungsbeispielen der erfindungsgemäßen Vorrichtung sowie des erfindungsgemäßen Verfahrens in Verbindung mit den Figuren erläutert.

## KURZE BESCHREIBUNG DER ZEICHNUNGEN

Es zeigt

Figur 1a            eine stark schematisierte Darstellung eines ersten Ausführungsbeispiels der erfindungsgemäßen Positionsmessanordnung in einem ersten Betriebsmodus;

Figur 1b, 1c        jeweils die Positionsmessanordnung aus Figur 1a in einem anderen Betriebsmodus;

Figur 2             eine vergrößerte Darstellung des optischen Ausgleichselements aus der Positionsmessanordnung gemäß dem ersten Ausführungsbeispiel;

Figur 3             eine schematische Darstellung mit verschiedenen relevanten geometrischen Größen zur Erläuterung eines Ausführungsbeispiels des erfindungsgemäßen Verfahrens;

Figur 4a, 4b        je eine stark schematisierte Darstellung eines zweiten Ausführungsbeispiels der erfindungsgemäßen Positionsmessanordnung in unterschiedlichen Betriebsmodi;

Figur 5             eine stark schematisierte Darstellung eines vierten Ausführungsbeispiels der erfindungsgemäßen Positionsmessanordnung;

Figur 6a - 6c       je eine stark schematisierte Darstellung eines fünften Ausführungsbeispiels der erfindungsgemäßen Positionsmessanordnung in unterschiedlichen Betriebsmodi;

Figur 7a - 7c      je eine stark schematisierte Darstellung eines sechsten Ausführungsbeispiels der erfindungsgemäßen Positionsmessanordnung in unterschiedlichen Betriebsmodi;

Figur 8a - 8c      je eine stark schematisierte Darstellung eines siebten Ausführungsbeispiels der erfindungsgemäßen Positionsmessanordnung in unterschiedlichen Betriebsmodi;

Figur 9      eine stark schematisierte Darstellung eines achten Ausführungsbeispiels der erfindungsgemäßen Positionsmessanordnung;

Figur 10a - 10c      je eine stark schematisierte Darstellung eines neunten Ausführungsbeispiels der erfindungsgemäßen Positionsmessanordnung in unterschiedlichen Betriebsmodi;

Figur 11a - 11c      je eine stark schematisierte Darstellung eines zehnten Ausführungsbeispiels der erfindungsgemäßen Positionsmessanordnung in unterschiedlichen Betriebsmodi;

Figur 12a - 12d      je eine stark schematisierte Darstellung eines elften Ausführungsbeispiels der erfindungsgemäßen Positionsmessanordnung in unterschiedlichen Betriebsmodi;

Figur 13a - 13d      je eine stark schematisierte Darstellung eines zwölften Ausführungsbeispiels der erfindungsgemäßen Positionsmessanordnung in unterschiedlichen Betriebsmodi.

## BESCHREIBUNG DER AUSFÜHRUNGSFORMEN

Erstes Ausführungsbeispiel

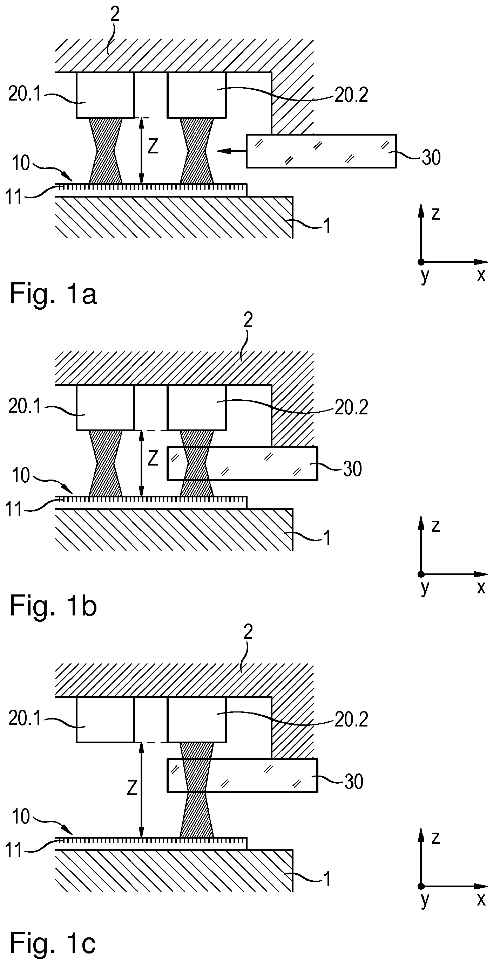

Ein erstes, vereinfachtes Ausführungsbeispiel der erfindungsgemäßen Positionsmessanordnung sowie des erfindungsgemäßen Verfahrens wird nachfolgend anhand der Figuren 1a - 1c, 2 und 3 erläutert. Da zunächst die grundlegenden Prinzipien der vorliegenden Erfindung beschrieben werden sollen, ist in diesem Ausführungsbeispiel eine Positionsmessanordnung mit lediglich zwei Abtasteinheiten vorgesehen; in den nachfolgenden Ausführungsbeispielen wird das erläuterte Grundprinzip u. a. auf Varianten mit mehr Abtasteinheiten und mehr erfassbaren räumlichen Freiheitsgraden erweitert.

Das in den Figuren 1a - 1c schematisiert dargestellte erste Ausführungsbeispiel der erfindungsgemäßen Positionsmessanordnung dient zur messtechnischen Bestimmung der Relativposition der beiden Objekte 1 und 2, die mindestens entlang einer ersten Messrichtung x zueinander beweglich angeordnet sind. Bei den Objekten 1, 2 kann es sich etwa um zueinander bewegliche Maschinenkomponenten handeln, z.B. einen beweglichen Tisch einer Halbleiter-Fertigungseinrichtung und einen demgegenüber stationären Maschinenrahmen. Die von der Positionsmessanordnung erzeugten positionsabhängigen Abtastsignale werden einer - nicht in den Figuren dargestellten - Maschinensteuerung übergeben, die damit die Positionierung des Tisches steuert.

Die erfindungsgemäße Positionsmessanordnung umfasst einerseits eine Maßverkörperung 10, die mit einem ersten Objekt 1 verbunden ist und mindestens eine sich entlang der Messrichtung x erstreckende Messteilung 11 aufweist. Die Messteilung 11 kann beispielsweise als bekannte inkrementale Auflicht-Messteilung ausgebildet sein, die aus entlang der Messrichtung x periodisch angeordneten Teilungsbereichen unterschiedlicher Reflektivität besteht. Anderseits umfasst die Positionsmessanordnung vorliegend zwei mit dem anderen Objekt 2 verbundene Abtasteinheiten 20.1, 20.2 zur optischen Abtastung der Messteilung 11; in nachfolgenden Ausführungsbeispielen sind jeweils mehr als zwei Abtasteinheiten vorgesehen. Die beiden Abtasteinheiten 20.1, 20.2 sind in Messrichtung x beabstandet voneinander angeordnet und sind entlang der - im dargestellten Ausführungsbeispiel vertikalen - Abstandsrichtung z in einem bestimmten Abtastabstand Z zur Maßverkörperung 10 beabstandet angeordnet. Beide Abtasteinheiten 20.1, 20.2 sind grundsätzlich identisch ausgebildet und umfassen optische Abtastelemente, über die jeweils ein optischer Abtaststrahlengang ausgebildet wird, um die Messteilung 11 optisch abzutasten und darüber positionsabhängige Signale in Form periodischer Inkrementalsignale bezüglich einer Relativbewegung der beiden Objekte 1, 2 zu erzeugen. Als - nicht in den Figuren dargestellte - optische Abtastelemente fungieren beispielsweise eine Lichtquelle, Optikelemente wie Linsen, Gitter und/oder Reflektoren sowie eine geeignete optoelektronische Detektoreinrichtung. Die konkrete Ausbildung der Abtasteinheiten 20.1, 20.2 sowie des entsprechenden optischen Abtastprinzips sind für die vorliegende Erfindung nicht wesentlich, d.h. hier können unterschiedlichste bekannte optische Abtastprinzipien mit unterschiedlich angeordneten Abtastelementen zur Erzeugung von Abtastsignalen in Form periodischer Inkrementalsignale genutzt werden. Möglich wäre etwa der Einsatz einer optischen Abtastung, wie sie z.B. in der EP 1 762 828 A2 der Anmelderin offenbart ist.

Der in den Figuren rechts dargestellten Abtasteinheit 20.2, nachfolgend als zweite Abtasteinheit 20.2 bezeichnet, ist erfindungsgemäß ein optisches Ausgleichselement 30 zugeordnet, das in den Abtaststrahlengang zwischen der Abtasteinheit 2 und der Maßverkörperung 10 ein- oder auswechselbar bzw. entfernbar ist. Beispielsweise kann das Ausgleichselement 30 über eine geeignete Wechsel-Mechanik vom Objekt 1 her eingeschwenkt oder eingeschoben werden und entsprechend wieder ausgewechselt oder herausgeschoben werden. Zur optischen Funktionalität des Ausgleichselements 30, welches im vorliegenden Ausführungsbeispiel als transparente, planparallele Platte ausgebildet ist, sei u.a. auf die nachfolgende Beschreibung einer Variante des erfindungsgemäßen Verfahrens verwiesen.

Im Ausgangszustand der erfolgenden Positionsbestimmung mit Hilfe der erfindungsgemäßen Positionsmessanordnung, dargestellt in Figur 1a, wird über die beiden Abtasteinheiten 20.1, 20.2 die identische Information bezüglich der Relativposition der beiden Objekte 1, 2 erzeugt. Das Medium zwischen den Abtasteinheiten 20.1, 20.2 und der Maßverkörperung 10 besitzt einen Brechungsindex $n_1$; typischerweise ist als Medium hierbei Luft oder Vakuum vorgesehen, d.h. für den Brechungsindex des Mediums gilt dann näherungsweise $n_1 \approx 1$. Das erfindungsgemäß ein- und auswechselbare Ausgleichselement 30, hier ausgebildet als transparente, planparallele Platte aus Glas, besitzt demgegenüber einen deutlich unterschiedlichen Brechungsindex $n_2$. Im Fall des nachfolgend erläuterten Vorgehens wird für die beiden Brechungsindizes $n_2 > n_1$ vorgesehen, d.h. ein gegenüber Luft höherer Brechungsindex des Materials des Ausgleichselements 30. Über diese Wahl wird letztlich ein Betrieb der erfindungsgemäßen Positionsmessanordnung auch für größere Abtastabstände Z möglich als dies ohne zusätzliche Maßnahmen der Fall wäre.

Es sei ausdrücklich darauf hingewiesen, dass die vorliegende Erfindung nicht auf diesen Fall beschränkt ist, grundsätzlich könnte auch $n_2 < n_1$ vorgesehen werden. In diesem Fall würde durch Einbringen des Ausgleichselements 30 in den Abtaststrahlengang einer Abtasteinheit 20.1, 20.2 ein funktionsfähiger Betrieb auch bei kleineren Arbeitsabständen Z möglich.

Das Objekt 2 bzw. die entsprechende Maschinenkomponente soll nun zeitweise in einen Arbeitsabstand von Objekt 1 bzw. der entsprechenden Maschinenkomponente gebracht werden, der den zulässigen Arbeitsbereich des Arbeitsabstands Z der beiden Abtasteinheiten 20.1, 20.2 übersteigt. Üblicherweise ist für eine bestimmte optische Abtastung ein zulässiger Arbeitsbereich des Abtastabstands Z zwischen Abtasteinheit 20.1, 20.2 und Maßverkörperung 10 spezifiziert, in dem eine korrekte bzw. zuverlässige Erzeugung von positionsabhängigen Abtastsignalen bzw. periodischen Inkrementalsignalen gewährleistet ist. Trotz des zweitweise vorgesehenen Betriebs außerhalb des zulässigen Arbeitsbereichs des Abtastabstands Z sollen anschließend im Normalbetrieb die Zähler-Nullpunkte der Positionsmessungen mit den beiden Abtasteinheiten 20.1, 20.2 den Zähler-Nullpunkten im Ausgangszustand entsprechen. Dies wird erfindungsgemäß gewährleistet, indem der Arbeitsbereich des Abtastabstands Z einer der beiden Abtasteinheiten 20.1, 20.2 zeitweise verschoben bzw. erweitert wird und die Positionsbestimmung geeignet zwischen den Abtasteinheiten 20.1, 20.2 umgeschaltet wird. Im Folgenden sei dieses Vorgehen im Detail erläutert.

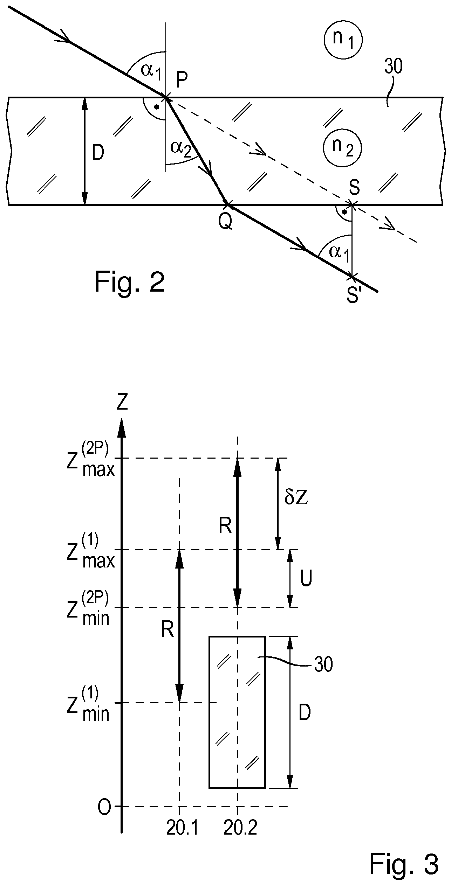

Wie in Figur 1b gezeigt, wird zunächst das Ausgleichselement 30 verschoben und in den Abtaststrahlengang der zweiten Abtasteinheit 20.2 eingewechselt. Während des Einwechsel-Vorgangs muss die Positionsmessung mit der zweiten Abtasteinheit 20.2 unterbrochen werden, so dass der Zähler-Nullpunkt der zweiten Abtasteinheit 20.2 ab diesem Zeitpunkt nicht mehr bekannt ist. Der Abtaststrahlengang der zweiten Abtasteinheit wird aufgrund des gegenüber Luft erhöhten Brechungsindexes $n_2$ im Ausgleichselement 30 geometrisch gestreckt, wobei dieser Effekt nachfolgend anhand von Figur 2 noch näher erläutert wird. Somit ändert sich durch das eingebrachte Ausgleichselement 30 letztlich der Arbeitsbereich des Abtastabstands Z, in dem die zweite Abtasteinheit 20.2 funktionsfähig ist und korrekte positionsabhängige Abtastsignale erzeugen kann.

Nach dem Einwechseln des Ausgleichselements 30 in den Abtaststrahlengang der zweiten Abtasteinheit 20.2 wird der Abstand zwischen den Objekten 1, 2 und damit der Abtastabstand Z vergrößert, um beispielsweise wie eingangs erläutert die entsprechende Maschine in einem Einrichtbetrieb zu betreiben. Dabei wird ein Bereich des Abtastabstands Z durchfahren, der nachfolgend als Übergabebereich des Abtastabstands-Arbeitsbereichs bezeichnet wird und in dem beide Abtasteinheiten 20.1, 20.2 funktionsfähig sind und positionsabhängige Abtastsignale erzeugen, nämlich die erste Abtasteinheit 20.1 ohne Ausgleichselement 30 und die zweite Abtasteinheit 20.2 mit dem in den Abtaststrahlengang eingewechseltem Ausgleichselement 20. Im Übergabebereich wird die zweite Abtasteinheit 20.2 daraufhin initialisiert bzw. referenziert, indem der Zähler-Nullpunkt der zweiten Abtasteinheit 20.2 neu ermittelt wird, und zwar so, dass anschließend beide Abtasteinheiten 20.1, 20.2 wieder konsistent die korrekten Positionsinformationen bezüglich der Position der beiden Objekte 1, 2 liefern. Die Positionsinformationen in Form von Positions-Zählerwerten der jeweiligen Abtasteinheiten resultieren dann in bekannter Art und Weise aus der Verrechnung der periodischen Inkrementalsignale mit dem jeweiligen Zähler-Nullpunkt.

Ab einem gewissen Abtastabstand Z, dargestellt in Figur 1c, fällt dann die unmodifizierte erste Abtasteinheit 20.1 wegen Überschreitung des zulässigen Arbeitsbereichs des Abtastabstands Z aus. Trotzdem kann erfindungsgemäß weiterhin eine gültige Positionsinformation bestimmt werden, nämlich durch die modifizierte zweite Abtasteinheit 20.2 mit eingewechseltem Ausgleichselement 30, die aufgrund dieser erfindungsgemäßen Maßnahme einen vergrößerten Arbeitsbereich des Abtastabstands Z besitzt.

Wenn der Abstand zwischen den Objekten 1, 2 bzw. der Abtastabstand Z schließlich wieder verringert werden soll, da z.B. der Einrichtbetrieb abgeschlossen ist, geht man umgekehrt vor wie vorstehend beschrieben. Dabei wird im Übergabebereich des Abtastabstands-Arbeitsbereichs die Positionsinformation der zweiten Abtasteinheit 20.2 verwendet, um die erste Abtasteinheit 20.1 zu initialisieren bzw. den Zähler-Nullpunkt der ersten Abtasteinheit 20.1 neu zu initialisieren. Nach dem Entfernen bzw. Auswechseln des Ausgleichselements 30 aus dem Abtaststrahlengang wird der Zähler-Nullpunkt der zweiten Abtasteinheit 20.2 dann so gesetzt, dass beide Abtasteinheiten 20.1, 20.2 die gleiche Positionsinformation liefern. Am Ende des gesamten Prozesses entsprechen die Zähler-Nullpunkte beider Abtasteinheiten 20.1, 20.2 dann wieder den Zähler-Nullpunkten aus dem Ausgangszustand.

Im Folgenden wird anhand von Figur 2 im Detail veranschaulicht, wie über das optische Ausgleichselement 30 der Abtaststrahlengang beeinflusst werden kann, um den Arbeitsbereich des Abtastabstands Z zu verändern. Hierbei ist für das vorliegende Ausführungsbeispiel eine transparente, planparallele Platte als Ausgleichselement 30 vorgesehen. Wie aus Figur 2 ersichtlich, läuft ein ausfallender Lichtstrahl, der das Ausgleichselement 30 durchlaufen hat, in die gleiche Richtung wie der auf das Ausgleichselement 30 einfallende Lichtstrahl, weist gegenüber diesem aber eine Verschiebung um den Verschiebungsbetrag $\overline{SS'}$ auf. Gemessen senkrecht zur Plattenoberfläche entspricht diese Verschiebung in Figur 2 hierbei dem Abstand zwischen den Punkten S und S'. In Näherung ist für die angegebenen kleinen Winkel $\alpha_1$, $\alpha_2$ des ein- und ausfallenden Lichtstrahls gegen die Platten-Normale der Verschiebungsbetrag $\overline{SS'}$ winkelunabhängig. Der Verschiebungsbetrag $\overline{SS'}$ hängt damit lediglich von der Dicke D des plattenförmigen Ausgleichselements 30 und den Brechungsindizes $n_1$, $n_2$ ab, wie die folgende Beziehungen unter Verwendung des Snelliusschen Brechungsgesetzes zeigen:

$$\overline{QS} = D \cdot \tan (\alpha_1) - D \cdot \tan (\alpha_2) \qquad (Gl. 1.1)$$

$$\overline{SS'} = \frac{\overline{QS}}{\tan (\alpha_1)} = D \cdot \left(1 - \frac{\tan (\alpha_2)}{\tan (\alpha_1)}\right) \approx D \cdot \left(1 - \frac{\sin (\alpha_2)}{\sin (\alpha_1)}\right) = D \cdot \left(1 - \frac{n_1}{n_2}\right) \qquad (Gl. 2.1)$$

mit:

$\overline{QS}$ := Abstandsbetrag auf der Lichtaustrittsseite der Platte zwischen Durchtrittspunkten des in der Platte abgelenkten Lichtstrahls und des unabgelenkten Lichtstrahls

$\overline{SS'}$ := Verschiebungsbetrag des abgelenkten Lichtstrahls, der die Platte durchlaufen hat gegenüber unabgelenktem Lichtstrahl

$\alpha_1$ := Winkel zwischen einfallendem Lichtstrahl und Normalen auf Lichteintrittsseite der Platte

$\alpha_2$ := Winkel zwischen austretendem Lichtstrahl und Normalen auf Lichtaustrittsseite der Platte

D := Dicke der Platte

$n_1$ := Brechungsindex des die Platte umgebenden Mediums

$n_2$ := Brechungsindex der Platte

Der gesamte Abtaststrahlengang der entsprechenden Abtasteinheit 20.2 erfährt demnach durch Einwechseln der planparallelen Platte bzw. des optischen Ausgleichselements 30 innerhalb der Platte eine geometrische Streckung. Auf diese Art und Weise wird somit der zulässige Arbeitsbereich des Abtastabstands Z, in dem die zugehörige Abtasteinheit 20.2 arbeiten kann und korrekte Positionsinformationen liefert, definiert verändert.

Die Auswirkung des optischen Ausgleichselements 30 bzw. des hier als planparallele Platte vorgesehenen Ausgleichselements 30 auf den Arbeitsbereich des Abtastabstands Z ist in der Darstellung der Figur 3 im Detail illustriert. Hierbei sind links die Verhältnisse für die erste Abtasteinheit 20.1 ohne Ausgleichselement 30 und rechts die Verhältnisse für die zweite Abtasteinheit 20.2 mit in den Abtaststrahlengang eingewechseltem Ausgleichselement 30 gezeigt. Die in Figur 3 verwendeten Größen sind folgendermaßen definiert:

Z : Abtastabstand zwischen Maßverkörperung und Abtasteinheit

$Z^{(1)}_{min}$ := minimal zulässiger Arbeitsabstand der unmodifizierten ersten Abtasteinheit

$Z^{(1)}_{max}$ := maximal zulässiger Arbeitsabstand der unmodifizierten ersten Abtasteinheit

$Z^{(2P)}_{min}$ := minimal zulässiger Arbeitsabstand der modifizierten zweiten Abtasteinheit mit eingewechseltem Ausgleichselement

$Z^{(2P)}_{max}$ := maximal zulässiger Arbeitsabstand der modifizierten zweiten Abtasteinheit mit eingewechseltem Ausgleichselement

$[Z^{(1)}_{min}, Z^{(1)}_{max}]$ : Arbeitsbereich des Abtastabstands der unmodifizierten ersten Abtasteinheit

$[Z^{(2P)}_{min}, Z^{(2P)}_{max}]$ : Arbeitsbereich des Abtastabstands der zweiten Abtasteinheit mit eingebrachtem Ausgleichselement

D := Dicke des plattenförmigen Ausgleichselements

R := Größe des zulässigen Abtastabstands-Arbeitsbereichs

$\delta Z$ := Resultierende Verschiebung des Abtastabstands-Arbeitsbereiches bei eingewechseltem plattenförmigen Ausgleichselement

Ferner gelten für die in Figur 3 veranschaulichten Verhältnisse zumindest näherungsweise die folgenden Beziehungen:

$$Z^{(1)}_{max} - Z^{(1)}_{min} = Z^{(2P)}_{max} - Z^{(2P)}_{min} = R \qquad \text{(Gl. 2.1)}$$

$$\delta Z = Z^{(2P)}_{max} - Z^{(1)}_{max} = Z^{(2P)}_{min} - Z^{(1)}_{min} \approx \overline{SS'} \approx D\left(1 - \frac{n_1}{n_2}\right) \qquad \text{(Gl. 2.2)}$$

$$U = R - \left|\delta Z\right| = R - D\left|1 - \frac{n1}{n2}\right| \qquad \text{(Gl. 2.3)}$$

Zusätzlich zu den vorstehend definierten Größen wird in diesen Beziehungen mit U die Größe des Übergabebereichs des Abtastabstands-Arbeitsbereichs bezeichnet, in dem die Arbeitsbereiche der Abtastabstände Z der beiden Abtasteinheiten 20.1, 20.2 überlappen, wenn der Arbeitsbereich einer Abtasteinheit 20.2 wie erläutert modifiziert wurde.

Die Ausbildung der des hier plattenförmigen ausgebildeten Ausgleichselements 30 in Bezug auf dessen Geometrie und Brechungsindex sollte demnach grundsätzlich derart erfolgen, dass sich eine Größe U des Übergabe-Bereiches U > 0 ergibt und demzufolge ein Übergabebereich mit endlicher Ausdehnung resultiert.

Zweites Ausführungsbeispiel

In den nachfolgenden Ausführungsbeispielen wird das der vorliegenden Erfindung zugrundeliegende Prinzip nunmehr auf Systeme bzw. Positionsmessanordnungen mit mehr als zwei Abtasteinheiten erweitert.

Um die vorliegende Erfindung in solchen Anwendungen nutzen zu können, ist vorteilhaft, wenn mehr Abtasteinheiten zur Verfügung stehen, als für die zu bestimmenden Objekt-Freiheitsgrade grundsätzlich erforderlich wären. Es sei in diesem Ausführungsbeispiel nachfolgend der Fall beschrieben, in dem sich die Abtasteinheiten in zwei Sätze aufteilen lassen, wobei jeder einzelne Satz von Abtasteinheiten für die Ermittlung der zu bestimmenden Objekt-Freiheitsgrade bereits grundsätzlich ausreichend wäre. Die Abtaststrahlengänge eines Satz von Abtasteinheiten werden in analoger Erweiterung des ersten Ausführungsbeispiels zeitweise mit eingewechselten optischen Ausgleichselementen modifiziert, der andere Satz von Abtasteinheiten hingegen bleibt unverändert.

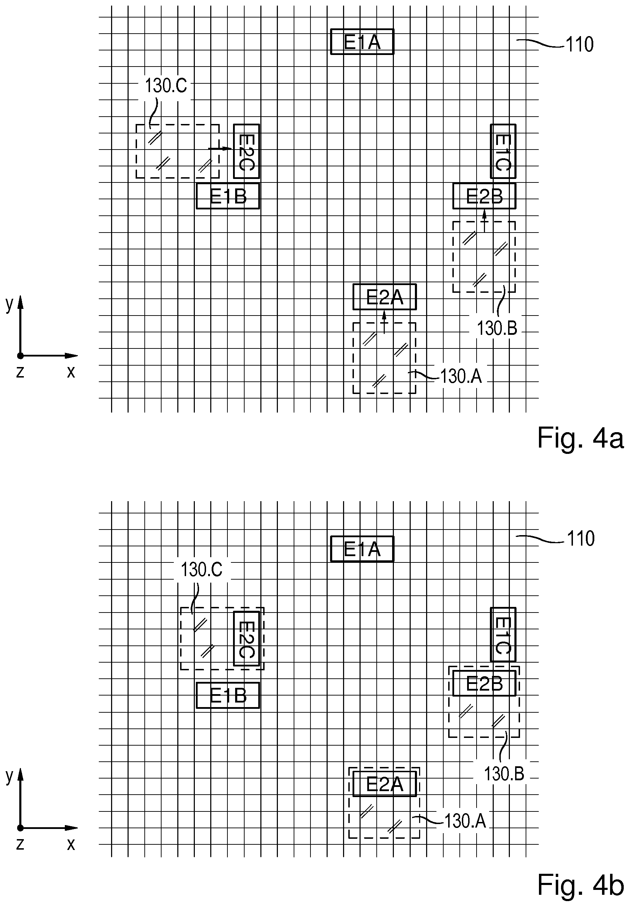

Figur 4a zeigt in sehr stark schematisierter Form beispielhaft eine mögliche Anordnung zweier Sätze mit jeweils mehreren Abtasteinheiten E1A, E1B, E1C, E2A, E2B, E2C in einem solchen System. Der erste Satz von Abtasteinheiten umfasst hierbei die drei Abtasteinheiten E1A, E1B und E1C, der zweite Satz die drei Abtasteinheiten E2A, E2B und E2C. Die vorliegend zu bestimmenden drei Objekt-Freiheitsgrade X, Y, RZ sind hierbei die relativen Verschiebungen der - hier nicht dargestellten - beiden relativbeweglichen Objekte entlang der angegebenen, orthogonalen Messrichtungen x und y sowie die relative Drehung der beiden Objekte um die Achse z, die senkrecht auf den beiden Messrichtungen x, y steht.

Auf Seiten der Maßverkörperung ist in dieser Ausführungsform eine Messteilung 110 vorgesehen, die als zweidimensionales Kreuzgitter ausgebildet und in den Figuren nur schematisiert angedeutet ist. Das Kreuzgitter umfasst eine erste und eine zweite Messteilung in Form einer jeweils periodischen Inkrementalteilung, wobei sich die erste und zweite Messteilung des Kreuzgitters entlang der beiden Messrichtungen x, y und damit senkrecht zueinander erstrecken. Soll ein größerer Verfahrbereich der zueinander beweglichen Objekte abgedeckt werden, so können etwa auch mehrere einzelne plattenförmige Kreuzgitter bzw. Maßverkörperungen zusammengesetzt verwendet werden.

Die Längsrichtungen der rechteckförmigen Abtasteinheiten E1A, E1B, E1C bzw. E2A, E2B, E2C geben in Figur 4a jeweils die Messrichtungen der einzelnen Abtasteinheiten E1A, E1B, E1C, E2A, E2B, E2C an. Das heißt, über die vier Abtasteinheiten E1A, E2A, E1B, E2B werden aus der Kreuzgitter-Abtastung Relativbewegungen entlang der ersten Messrichtung x bestimmt bzw. messtechnisch erfasst, über die beiden Abtasteinheiten E1C, E2C erfolgt über die Kreuzgitter-Abtastung die Positionsbestimmung entlang der zweiten Messrichtung y. Über die drei Abtasteinheiten E2A - E2C des zweiten Satzes von Abtasteinheiten sind damit die gleichen räumlichen Bewegungsfreiheitsgrade der beiden Objekte erfassbar wie über die drei Abtasteinheiten E1A - E1C des ersten Satzes von Abtasteinheiten.

Analog zum vorhergehenden Ausführungsbeispiel ist auch hier vorgesehen, bevor sich das entlang der z-Richtung bewegliche Objekt aus dem zulässigen Arbeitsbereich der Abtasteinheiten E1A, E1B, E1C, E2A, E2B, E2C heraus bewegt, optische Ausgleichselemente 130.A, 130.B und 130.C in die Abtaststrahlengänge der drei Abtasteinheiten E2A, E2B, E2C des zweiten Satzes von Abtasteinheiten einzuwechseln, wie dies in Figur 4b gezeigt ist.

Im Übergabebereich des Abtastabstands-Arbeitsbereichs werden auch in diesem Ausführungsbeispiel unbestimmte Zähler-Nullpunkte der inkremental messenden Abtasteinheiten E1A, E1B, E1C oder E2A, E2B, E2C so gesetzt, dass die beiden Sätze von Abtasteinheiten E1A, E1B, E1C bzw. E2A, E2B, E2C konsistent die Objekt-Freiheitsgrade X, Y, RZ bestimmen. Dies kann erreicht werden, indem zunächst mit Hilfe des einen Satzes von Abtasteinheiten E1A, E1B, E1C oder E2A, E2B, E2C, bei dem die Zähler-Nullpunkte bekannt sind, die Objekt-Freiheitsgrade X, Y, RZ ermittelt werden. Nun werden für die zu initialisierenden Abtasteinheiten E1A, E1B, E1C oder E2A, E2B, E2C die Positions-Zählerwerte errechnet, welche für die ermittelten Objekt-Freiheitsgrade X, Y, RZ zu erwarten wären. Dann werden die unbekannten Zähler-Nullpunkte so gesetzt, dass die tatsächlichen Positions-Zählerwerte der zu initialisierenden Abtasteinheiten E1A, E1B, E1C oder E2A, E2B, E2C mit den zu erwartenden Positions-Zählerwerten innerhalb eines vorgegebenen Toleranzbereiches übereinstimmen. In bestimmten Fällen kann es dabei vorteilhaft sein, die Berechnung der zu erwartenden Positions-Zählerwerte ohne den Umweg über die Objekt-Freiheitsgrade X, Y, RZ zu implementieren.

Es sei zudem darauf hingewiesen, dass im Rahmen der vorliegenden Erfindung die Objekt-Freiheitsgrade nicht notwendiger Weise über zwei Sätze von Abtasteinheiten unabhängig voneinander bestimmbar sein müssen. Im Allgemeinen reicht es aus, wenn sich während der Initialisierung einer oder mehrerer Abtasteinheiten genügend weitere Abtasteinheiten mit gültigen Positions-Zählerwerten in ihrem Arbeitsbereich befinden, um die Objekt-Freiheitsgrade zu ermitteln. Beispielsweise lässt sich erfindungsgemäß der erweiterte Arbeitsbereich bereits realisieren, wenn im vorliegenden Ausführungsbeispiel die Abtasteinheiten E1A und E1B nicht vorhanden sind. Das Einbringen der Ausgleichselemente erfolgt in diesem Fall schrittweise. Beispielsweise kann zunächst das Ausgleichselement 130.A eingebracht werden. Die Objekt-Freiheitsgrade X, Y, RZ lassen sich danach noch immer mit Hilfe der Abtasteinheiten E2B, E1C und E2C ermitteln, so dass im Übergabebereich nun die Initialisierung der Abtasteinheit E2A durchgeführt werden kann. Danach wird beispielsweise das Ausgleichselement 130.B eingebracht und die Abtasteinheit E2B im Übergabebereich mit Hilfe der Positionsinformationen der Abtasteinheiten E2A, E1C und E2C initialisiert. Schließlich folgt das Einbringen des Ausgleichselements 130.C und die Initialisierung der Abtasteinheit E2C, wiederum mit Hilfe der übrigen Abtasteinheiten. Die Initialisierung beim Entfernen der Ausgleichselemente 103.A - 130.C erfolgt analog schrittweise.

## Drittes Ausführungsbeispiel

Das in den Figuren 4a, 4b skizzierte zweite Ausführungsbeispiel der erfindungsgemäßen Positionsmessanordnung lässt sich einfach in Richtung eines dritten Ausführungsbeispiels abwandeln. So kann hierzu vorgesehen werden, dass der Abtaststrahlengang aller Abtasteinheiten derart ausgebildet wird, dass darüber gleichzeitig die Erzeugung positionsabhängiger Abtastsignale entlang der Messrichtung z erfolgt. Geeignet hierzu wäre etwa ein Abtaststrahlengang wie er z.B. aus der bereits vorstehend erwähnten EP 1 762 828 A2 der Anmelderin bekannt ist.

Das bedeutet etwa für die Abtasteinheit E1A und E1B sowie deren Pendants E2A und E2B im zweiten Satz von Abtasteinheiten, dass darüber zwei Positions-Messwerte erzeugbar sind. Hierbei handelt es sich um einen Positions-Messwert, der sensitiv auf Verschiebungen der Objekte entlang der Messrichtung x ist und einen weiteren Positions-Messwert, der sensitiv auf Verschiebungen der Objekte entlang der weiteren Messrichtung z ist. Die Abtasteinheit E1C sowie deren Pendant E2C im zweiten Satz von Abtasteinheiten sind analog hierzu sensitiv auf Bewegungen entlang der beiden Messrichtungen y und z.

In einer derartigen Ausführungsform der erfindungsgemäßen Positionsmessanordnung kann aus jedem der beiden Sätze von Abtasteinheiten E1A - E1C bzw. E2A - E2C die Relativpose der zueinander beweglichen Objekte in allen räumlichen Freiheitsgraden X, Y, Z, RX, RY, RZ ermittelt werden. Die sind die Verschiebungen X, Y, Z entlang der insgesamt drei linearen Messrichtungen x, y und z sowie die Rotationsbewegungen RX, RY, RZ um die drei Messrichtungen x, y, z. Sofern die Zähler-Nullpunkte gültig sind, können diese wie vorstehend erläutert im Übergabebereich des Abtastabstands-Arbeitsbereichs zur Initialisierung der anderen Abtasteinheiten verwendet werden.

## Viertes Ausführungsbeispiel

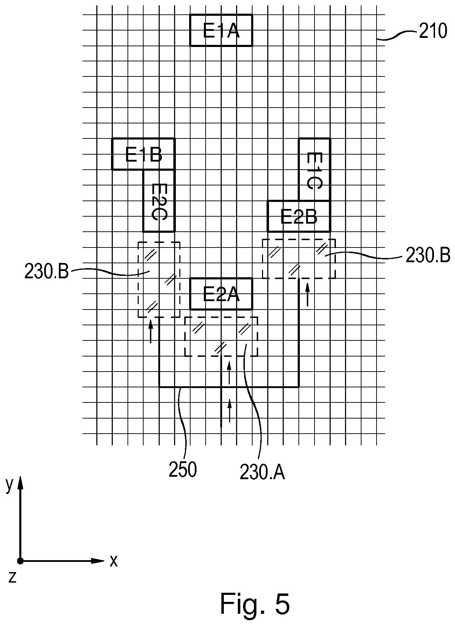

Ein weitere Variante des zweiten Ausführungsbeispiels der erfindungsgemäßen Positionsmessanordnung ist als viertes Ausführungsbeispiel in Figur 5 stark schematisiert dargestellt.

Hier ist nunmehr vorgesehen, die Mehrzahl vorgesehener optischer Ausgleichselemente 230.A, 230.B, 230C mittels eines gemeinsamen, einzigen Aktuators 250 in die Abtaststrahlengänge eines Satzes von Abtasteinheiten E2A, E2B, E2C ein- und auszuwechseln. Der Aktuator 250 ist in Figur 5 lediglich schematisiert angedeutet und kann in vielfältigster Form ausgebildet sein, beispielsweise in Form einer durch einen Motor oder elektromagnetisch, hydraulisch oder pneumatisch angetriebenen Verstell-Mechanik.

Die verschiedenen Abtasteinheiten E1A - E1C bzw. E2A - E2C können dabei gemäß dem ersten oder zweiten Ausführungsbeispiel einachsig oder wie im dritten Ausführungsbeispiel zweiachsig ausgebildet sein, also eine Positionserfassung entlang zweier Messrichtungen, beispielsweise x und z, ermöglichen.

Desweiteren ist es in einer Variante dieses Ausführungsbeispiels möglich, lediglich ein einziges Ausgleichselement vorzusehen, beispielsweise eine einzige planparallele Platte. Diese wird dann mit Hilfe des Aktuators in den Abtaststrahlengang der entsprechend angeordneten Abtasteinheiten ein- und ausgewechselt.

Fünftes Ausführungsbeispiel

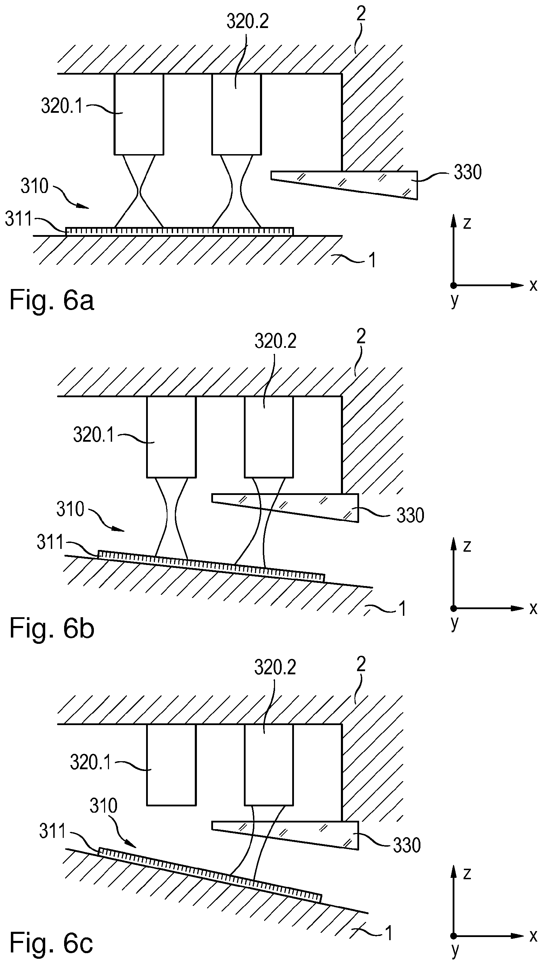

Ein fünftes Ausführungsbeispiel der erfindungsgemäßen Vorrichtung sowie des zugehörigen Verfahrens zum Betrieb derselbigen wird nachfolgend anhand der schematischen Figuren 6a - 6c erläutert.

Der maßgebliche Unterschied zu den vorhergehenden Ausführungsbeispielen besteht hierbei in der Ausbildung des vorgesehenen optischen Ausgleichselements 330, welches nunmehr als transparente keilförmige Platte ausgeführt ist. Während in den bisher erläuterten Ausführungsbeispielen über das Ein- und Auswechseln des plattenförmigen Ausgleichselement jeweils eine Veränderung des Arbeitsbereichs des Abtastabstands zwischen Maßverkörperung und Abtasteinheit möglich war, erlaubt das Ein- und Auswechseln des als keilförmige Platte ausgebildeten Ausgleichselements 330 nunmehr eine definierte Veränderung des Arbeitsbereichs der winkelmäßigen Orientierung zwischen Maßverkörperung 310 und Abtasteinheit 320.2. Allgemein kann demzufolge davon gesprochen werden, dass über die vorliegende Erfindung mittels des optischen Ausgleichselements, das zumindest zeitweise in den Abtaststrahlengang mindestens einer Abtasteinheit ein- oder ausgewechselt wird, eine Veränderung des Arbeitsbereichs bewirkbar ist, der bezüglich der räumlichen Anordnung von Abtasteinheit und Maßverkörperung gegeben ist und in dem die Abtasteinheit positionsabhängige Signale erzeugen kann. Die Geometrie und der Brechungsindex des Ausgleichselements werden hierbei derart gewählt, dass sich auch nach Einwechseln des Ausgleichselements der Arbeitsbereich mindestens einer Abtasteinheit in einem Übergabebereich mit dem Arbeitsbereich einer weiteren Abtasteinheit überlappt.

Konkret bedeutet dies im vorliegenden fünften Ausführungsbeispiel somit, dass durch das Ein- und Auswechseln des Ausgleichselements 330 der zulässige Verkippungsbereich zwischen Maßverkörperung 310 und Abtasteinheit 320.2 erweiterbar ist. Wie im ersten Ausführungsbeispiel sind wiederum zwei grundsätzlich gleichartig ausgebildete Abtasteinheiten 320.1, 320.2 vorhanden, die in der Lage sind, die Relativposition zwischen den zwei Objekten 1, 2 zu bestimmen.

Analog zum Vorgehen in den vorhergehenden Beispielen, ist gemäß Figur 6b vorgesehen, zunächst das Ausgleichselement 330 in Form der keilförmigen Platte in den Abtaststrahlengang der Abtasteinheit 320.2 einzuwechseln. Während des Einwechselns wird die Positionsmessung mit dieser Abtasteinheit 320.2 unterbrochen, womit auch der Zähler-Nullpunkt dieser Abtasteinheit 320.2 verloren geht bzw. nicht mehr bekannt ist. Durch die keilförmige Platte wird der Abtaststrahlengang der zugeordneten Abtasteinheit 320.2 abgelenkt. Dadurch ändert sich letztlich der Winkelbereich in definierter Art und Weise, in dem diese Abtasteinheit 320.2 arbeiten kann und korrekte positionsabhängige Abtastsignale erzeugt. Mit anderen Worten bzw. allgemein ausgedrückt: Durch das Einwechseln des als keilförmige Platte ausgebildeten Ausgleichselements 330 ändert sich der zulässige Arbeitsbereich der zulässigen winkelmäßigen Orientierung zwischen Maßverkörperung 210 und Abtasteinheit 320.2.

Verkippt nun das Objekt 2, an dem die Abtasteinheiten 320.1, 320.2 angeordnet sind, relativ zum Objekt 1 mit der Maßverkörperung 310 in die gleiche Richtung, in die der Abtaststrahlengang durch das Ausgleichselement 330 verkippt wurde, so resultiert ein Arbeitsbereich in Bezug auf die zulässige Verkippung von Abtasteinheit 320.2 und Maßverkörperung 310, in dem beide Abtasteinheiten 320.1, 320.2 arbeiten können und jeweils korrekte positionsabhängige Abtastsignale erzeugen. Im entsprechenden Übergabebereich der Arbeitsbereiche wird dann der Zähler-Nullpunkt der Abtasteinheit 320.2 mit eingebrachtem Ausgleichselement 330 neu ermittelt, so dass anschließend beide Abtasteinheiten 320.1, 320.2 die Relativ-Position der beiden zueinander beweglichen Objekte 1, 2 messtechnisch erfassen können.

Ab einem gewissen Verkippwinkel zwischen den beiden Objekten 1, 2 fällt, wie in Figur 6c gezeigt, die Abtasteinheit 320.1 ohne eingewechseltes Ausgleichselement 330 aus und lediglich die Abtasteinheit 320.2 mit eingewechseltem Ausgleichselement 330 und verändertem Verkippwinkel-Arbeitsbereich liefert weiterhin gültige Positionsinformationen.

Durchläuft man anschließend diese Verfahrens-Sequenz in umgekehrter Reihenfolge, so endet man wieder in der Ausgangssituation gemäß Figur 6a, in der beide Abtasteinheiten 320.1, 320.2 im hochgenauen Betrieb arbeiten und entsprechende positionsabhängige Abtastsignale erzeugen.

Sechstes Ausführungsbeispiel

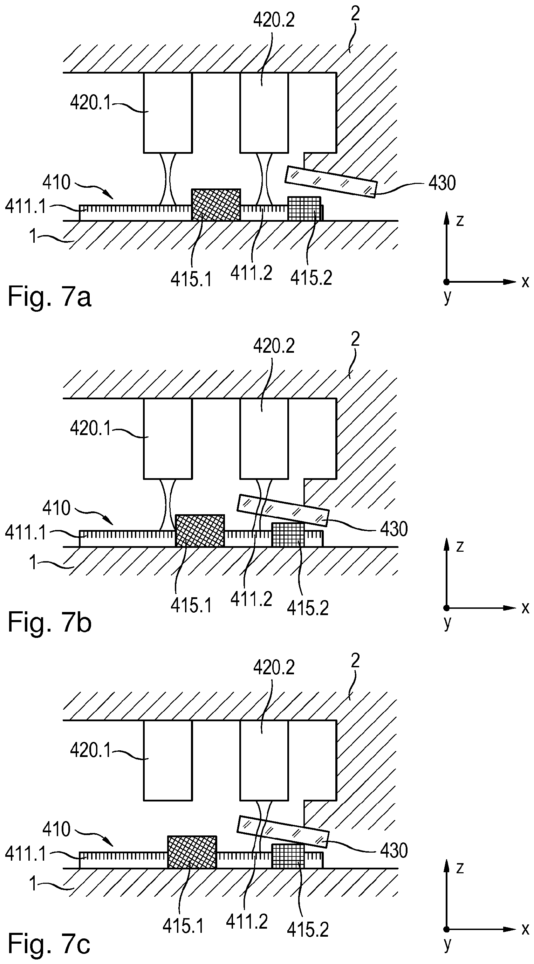

Ein weiteres, sechstes Ausführungsbeispiel der erfindungsgemäßen Positionsmessanordnung ist in den Figuren 7a - 7c analog zur Darstellung der vorhergehenden Ausführungsbeispiele gezeigt.

Dabei ist in diesem Ausführungsbeispiel nunmehr die gezielte Veränderung des Arbeitsbereichs des Verfahrbereichs zwischen Maßverkörperung 410 und Abtasteinheit 420.2 entlang einer ersten Messrichtung x vorgesehen. Dies erfolgt vorliegend durch Ein- und Auswechseln eines wiederum anders ausgebildeten Ausgleichselements 430 in den Abtaststrahlengang einer Abtasteinheit 420.2. So ist das Ausgleichselement 430 nunmehr als transparente, schräggestellte planparallele Platte ausgebildet und bewirkt einen definierten Strahlversatz in Richtung der Messrichtung x. Ein derartiges Vorgehen kann gewählt werden, wenn z.B. eine Vergrößerung des Verfahrbereichs zwischen Maßverkörperung und Abtasteinheit 420.2 durch einfaches Verlängern der Maßverkörperung 410 aus Platzgründen auf dem Objekt 2 nicht möglich ist und etwa ein Werkstück in einer entsprechenden Maschine diesen Platz benötigt. In den Figuren 7a - 7c sind zur Veranschaulichung dieser Problematik entsprechende Hindernisse 415.1, 415.2 schematisiert angedeutet.

Die in den Figuren 7a - 7c dargestellte Sequenz von Verfahrensschritten zur Erweiterung des Arbeitsbereichs des Verfahrbereichs zwischen Maßverkörperung 410 und Abtasteinheit 420.2 entlang der ersten Messrichtung x entspricht prinzipiell den Verfahrensschritten zur Erweiterung des Kippbereichs aus dem vorhergehenden fünften Ausführungsbeispiel.

Siebtes Ausführungsbeispiel

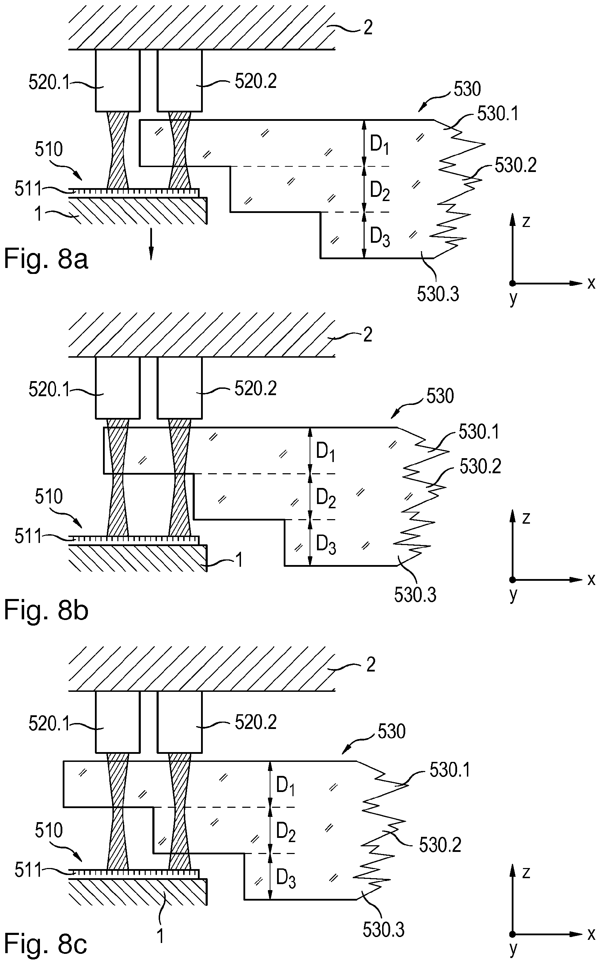

Eine weitere Möglichkeit zur Ausbildung des optischen Ausgleichselements ist im siebten Ausführungsbeispiel der erfindungsgemäßen Vorrichtung in den Figuren 8a - 8c veranschaulicht.

So ist in diesem Ausführungsbeispiel das Ausgleichselement 530 als transparente, mehrstufige planparallele Platte ausgebildet, das vorliegend n = 3 Stufen bzw. Teil-Ausgleichselemente 530.1, 530.2, 530.3 aufweist, die hier zu einem integralen Körper zusammengefügt sind. Zu berücksichtigen ist bei der Ausbildung des Ausgleichselements 530 in diesem Fall, dass der Abstand der Stufen 530.1, 530.2, 530.3 entlang der Richtung x größer als der Abstand zweier benachbarter Abtasteinheiten 520.1, 520.2 entlang dieser Richtung x zuzüglich der Breite des Abtaststrahlengangs entlang der Richtung x sein muss.

Über die geeignet gewählten Höhen bzw. Dicken $D_1$, $D_2$, $D_3$ der hier vorliegenden n = 3 Stufen 530.1 - 530.3 wird jeweils eine Verschiebung des Abtastabstands-Arbeitsbereiches um einen Betrag $\delta Z_1$, $\delta Z_2$, $\delta Z_3$ gemäß der oben aufgeführten Beziehung 2.2 eingestellt.

Das derart ausgebildete Ausgleichselement 530 wird vorzugsweise schrittweise in die Abtaststrahlengänge der beiden Abtasteinheiten 520.1, 520.2 eingewechselt bzw. eingebracht, die Übergabe der Zähler-Nullpunkte zwischen den Abtasteinheiten 520.1, 520.2 erfolgt mehrfach im Wechsel zwischen den einzelnen Abtasteinheiten 520.1, 520.2.

Im Folgenden wird zur anschaulichen Erläuterung des Grundprinzips bei Verwendung eines derartigen Ausgleichselements 530 wiederum ein vereinfachtes System mit lediglich zwei Abtasteinheiten 520.1, 520.2 herangezogen, wie es in den Figuren 8a - 8c skizziert ist. Im ersten Schritt, gezeigt in Figur 8a, wird dabei das Ausgleichselement 530 nur so weit eingeschoben bzw. eingewechselt, dass der Abtaststrahlengang der in den Figuren rechts dargestellten Abtasteinheit 520.2 eine erste Stufe 530.1 des Ausgleichselements 530 durchtritt. Danach werden die Zähler-Nullpunkte der Abtasteinheit 520.2 mit Hilfe der Positionsinformation der Abtasteinheit 520.1 initialisiert. Im nächsten Schritt wird gemäß Figur 8b die erste Stufe 530.1 des Ausgleichselements 530 auch in den Abtaststrahlengang der in den Figuren links angeordneten Abtasteinheit 520.1 geschoben. Der Positionswert der anderen Abtasteinheit 520.2 bleibt dabei gültig, so dass damit der Zähler-Nullpunkt der Abtasteinheit 520.1 reinitialisiert werden kann. Im folgenden Schritt, veranschaulicht in Figur 8c, wird das Ausgleichselement 530 nun so weit in die Abtaststrahlengänge geschoben, dass der Abtaststrahlengang der rechten Abtasteinheit 520.2 die zweite Stufe 530.2 des Ausgleichselements 530 durchtritt, während der Abtaststrahlengang der linken Abtasteinheit 520.1 weiterhin nur die erste Stufe 530.1 durchtritt. Erneut erfolgt die Übergabe der Zähler-Nullpunkte von derjenigen Abtasteinheit, die noch korrekte Positionsinformationen liefert auf die jeweils andere Abtasteinheit. Dieses Vorgehen kann nun im allgemeinen Fall von n Stufen so lange wiederholt werden, bis die Abtaststrahlengänge einer oder beider Abtasteinheiten 520.1, 520.2 die vollständige Dicke D = $D_1$ +...+ $D_n$ des Ausgleichselements 530 durchtreten. Insgesamt lässt sich derart eine Verschiebung des Abtastabstands-Arbeitsbereiches der Abtasteinheiten 520.1, 520.2 um $\delta Z_1$ +...+ $\delta Z_n$ realisieren, ohne die Zähler-Nullpunkte dabei zu verlieren.

Grundsätzlich wäre es ferner alternativ zur gezeigten Variante möglich, das aus mehreren Teil-Ausgleichselementen 530.1 - 530.3 ausgebildete Ausgleichselement 530 so auszuführen, dass dieses als transparente mehrstufige Platte ausgeführt wird, die mehrere unterschiedliche Keilwinkel aufweist. Darüber könnte dann analog zum obigen fünften Ausführungsbeispiel der Arbeitsbereich des Kippwinkels der entsprechenden Abtasteinheiten stufenweise verändert werden. Ebenfalls analog zum vorhergehenden sechsten Ausführungsbeispiel wäre natürlich auch ein schiefstehendes, stufenförmiges Ausgleichselement zur Erweiterung des Arbeitsbereichs für den Verfahrweg im Rahmen der vorliegenden Erfindung realisierbar.

Achtes Ausführungsbeispiel

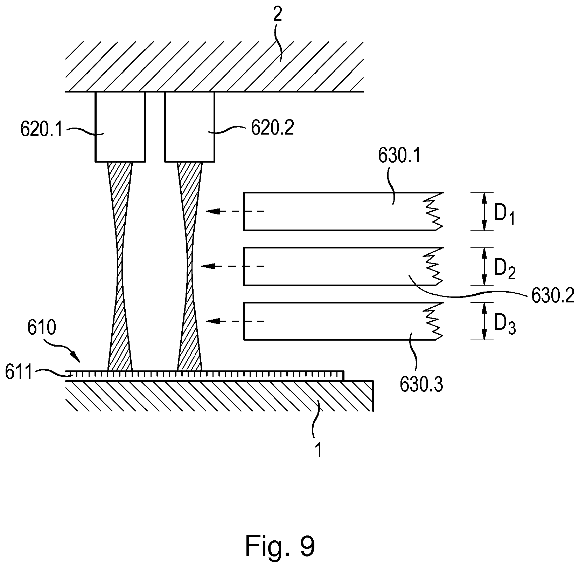

Ein achtes Ausführungsbeispiel der vorliegenden Erfindung ist schließlich in Figur 9 stark schematisiert dargestellt; wiederum wird hierbei eine alternative Variante eines geeigneten optischen Ausgleichselements vorgeschlagen.

Gemäß diesem Ausführungsbeispiel ist es auch möglich, statt eines einzigen, gestuften Ausgleichselements in Form eines integralen Körpers mehrere einzelne, ein- und auswechselbare plattenförmige (oder ggf. auch keilförmige) Teil-Ausgleichselemente 630.1, 630.2, 630.3 zu verwenden. Die Teil-Ausgleichselemente 630.1, 630.2, 630.3 werden hierbei nacheinander und einzeln erst in den Abtaststrahlengang einer, und dann zweier benachbarter Abtasteinheiten 620.1, 620.2 eingewechselt. Die Übergabe der Zähler-Nullpunkte im Übergabebereich erfolgt zwischen den verschiedenen Abtasteinheiten 620.1, 620.2 analog zum Vorgehen mit einem integral ausgebildeten, stufenförmigen Ausgleichselement.

Selbstverständlich ebenfalls analog zum fünften und sechsten Ausführungsbeispiel können auch keilförmige Platten oder schräggestellte planparallele Platten zur gezielten Veränderung der jeweiligen Arbeitsbereiche derart verwendet werden.

Zusätzlich sind auch Kombinationen aus planparallelen Platten, schrägstehend planparallelen Platten und keilförmigen Platten als jeweils vorgesehene Teil-Ausgleichselemente möglich.

Neuntes Ausführungsbeispiel

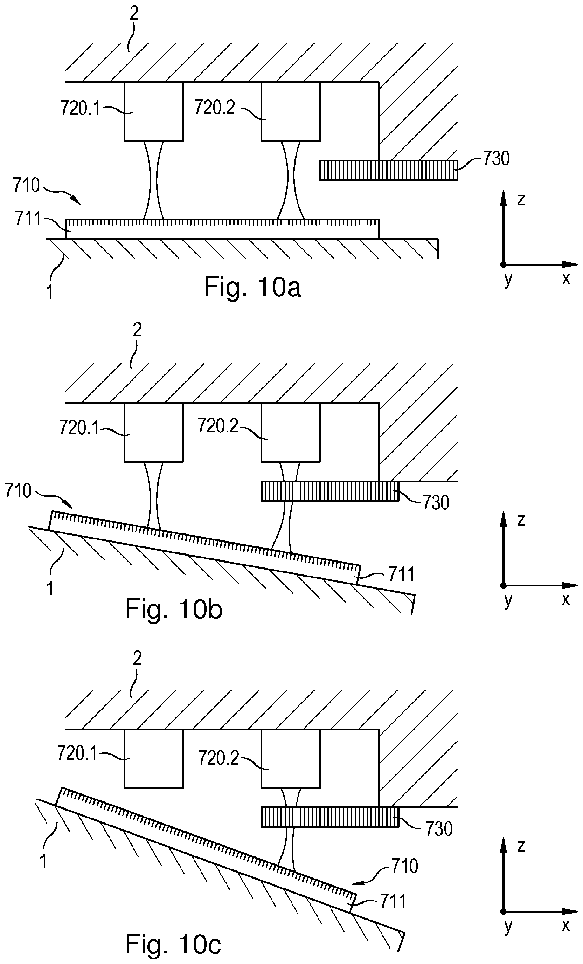

Eine weitere Möglichkeit zur Ausbildung des optischen Ausgleichselements ist im neunten Ausführungsbeispiel der erfindungsgemäßen Vorrichtung in den Figuren 10a - 10c veranschaulicht. Prinzipiell entspricht dieses Ausführungsbeispiel ansonsten den bereits vorstehend erläuterten Ausführungsbeispielen.

Vorgesehen ist wiederum eine Maßverkörperung 710 mit einer sich entlang der Messrichtung x erstreckenden Messteilung 711, die mit einem ersten Objekt 1 verbunden ist. Mit dem zweiten Objekt 2 sind die beiden identisch ausgebildeten Abtasteinheiten 720.1, 720.2 verbunden, über die die optische Abtastung der Messteilung 711 erfolgt. Das optische Ausgleichselement 730 ist in den Abtaststrahlengang zwischen der Abtasteinheit 720.2 und der Maßverkörperung 710 ein- und auswechselbar. Im vorliegenden Ausführungsbeispiel ist das optische Ausgleichselement 730 nunmehr als diffraktives Element in Form eines Transmissionsgitters ausgebildet, welches den Abtaststrahlengang des Abtasteinheit 720.2 um einen konstanten Winkel beugt.

Im Ausgangszustand, dargestellt in Figur 10a, wird über die beiden Abtasteinheiten 720.1, 720.2 zunächst wiederum die identische Information bezüglich der Relativlage der Objekte 1, 2 erzeugt.

Beispielsweise im Einrichtbetrieb ist dann vorgesehen, dass das Objekt 1 relativ gegenüber dem Objekt 2 verkippt und dabei der zulässige Arbeitsbereich der winkelmäßigen Orientierung zwischen der Maßverkörperung 710 und den Abtasteinheiten 720.1, 720.2 zeitweise überschritten wird. Die Verkippung erfolgt hierbei um eine Achse, die entlang der in den Figuren angegebenen y-Richtung orientiert ist, wobei die y-Richtung wiederum senkrecht zur Messrichtung x orientiert ist. Um trotzdem eine korrekte Positionsbestimmung zu gewährleisten, wird gemäß Figur 10b das Ausgleichselement 730 in den Abtaststrahlengang der Abtasteinheit 720.2 eingewechselt, wobei dabei die Positionsmessung mit dieser Abtasteinheit 720.2 unterbrochen wird. Über das eingebrachte Ausgleichselement 730 wird der Abtaststrahlengang in diesem Fall geknickt und damit der Arbeitsbereich der winkelmäßigen Orientierung zwischen der Maßverkörperung 710 und der Abtasteinheit 720.2 verändert.

Im Gefolge wird gemäß Figur 10c die Verkippung zwischen den beiden Objekten 1, 2 weiter vergrößert und dabei ein Übergabebereich des Verkippungs-Arbeitsbereichs durchfahren, in dem beide Abtasteinheiten 720.1, 720.2 funktionsfähig sind. Es erfolgt hier wiederum eine Initialisierung bzw. Referenzierung der Abtasteinheit 720.2. Wird die Verkippung wie in Figur 10c gezeigt vergrößert, so fällt ab einem bestimmten Verkippwinkel schließlich die andere Abtasteinheit 720.1 aus und die Positionsbestimmung erfolgt ausschließlich über die wieder initialisierte Abtasteinheit 720.2 mit eingeschwenktem Ausgleichselement 730. Wird die Verkippung im Anschluss wieder verringert, wird umgekehrt zum beschriebenen Vorgehen vorgegangen.

Zehntes Ausführungsbeispiel

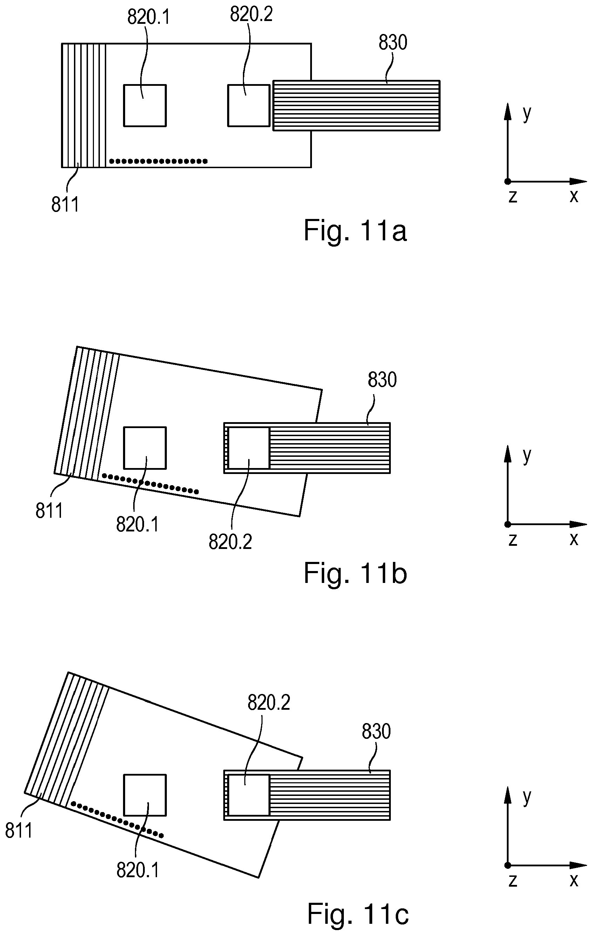

Ein zehntes Ausführungsbeispiel der vorliegenden Erfindung ist in den Figuren 11a - 11c stark schematisiert dargestellt. Wiederum ist hier eine alternative Variante eines geeigneten optischen Ausgleichselements vorgesehen, nämlich ein diffraktives Element in Form eines Transmissionsgitters. In den Figuren 11a - 11c ist dabei jeweils eine Draufsicht auf die beiden Abtasteinheiten 820.1, 820.2 gezeigt, die an einem - nicht dargestellten - oberen Objekt angeordnet sind und sich gegenüber der Maßverkörperung bzw. der Messteilung 811 am - ebenfalls nicht dargestellten - unteren Objekt entlang der Messrichtung x bewegen. Die Messteilung 811 erstreckt sich hierbei entlang der x-Richtung natürlich über den gesamten Bereich der Maßverkörperung, lediglich aus Gründen der Darstellung wurde in den Figuren nur in einem Teilbereich der Maßverkörperung die Messteilung 811 explizit eingezeichnet.

Während im vorstehenden Ausführungsbeispiel mit Hilfe des als diffraktives Element ausgebildeten Ausgleichselements der Verkippbereich bezüglich einer Achse senkrecht zur Zeichenebene definiert wurde (y-Achse), ist es gemäß dem zehnten Ausführungsbeispiel auch möglich, den Verkippbereich bezüglich einer Achse senkrecht auf die Maßverkörperung bzw. Messteilung 811 definiert zu verändern, also einer Achse entlang der in den Figuren angegebenen z-Richtung.

In der in Figur 11a gezeigten Ausgangssituation erfolgt analog zum vorhergehenden Beispiel die Positionsmessung mit Hilfe der beiden Abtasteinheiten 820.1, 820.2.

Wie in Figur 11b dargestellt, wird dann das Ausgleichselement 830 in den Abtaststrahlengang der zweiten Abtasteinheit 820.2 eingebracht. Über das als Transmissionsgitter ausgebildete Ausgleichselement 830 wird der Verkippbereich der zweiten Abtasteinheit 820.2 um eine Achse senkrecht auf die Messteilung 811 definiert verändert. Während des Einbringens des Ausgleichselements 830 fällt die Positionsmessung über die zweite Abtasteinheit 820.2 kurzzeitig aus und es ist im Gefolge die Zählerposition der zweiten Abtasteinheit 820.2 nicht mehr bekannt. In einem bestimmten Übergabebereich bzgl. des Verkippwinkels um eine Achse senkrecht auf die Messteilung 811 sind dann wieder beide Abtasteinheiten 820.1, 820.2 funktionsfähig. Innerhalb dieses Übergabebereichs wird die zweite Abtasteinheit 820.2 dann wieder referenziert, so dass anschließend über beide Abtasteinheiten 820.1, 820.2 wieder korrekte Positionswerte erzeugt werden.

Ab einem gewissen Verkippwinkel fällt dann, wie in Figur 11c gezeigt, die erste Abtasteinheit 820.1 aus und lediglich die zweite Abtasteinheit 820.2 liefert anschließend noch korrekte Positionswerte.

Wird die Verkippung im Anschluss wieder verringert, wird wie vorher umgekehrt zum beschriebenen Vorgehen vorgegangen.

Elftes Ausführungsbeispiel

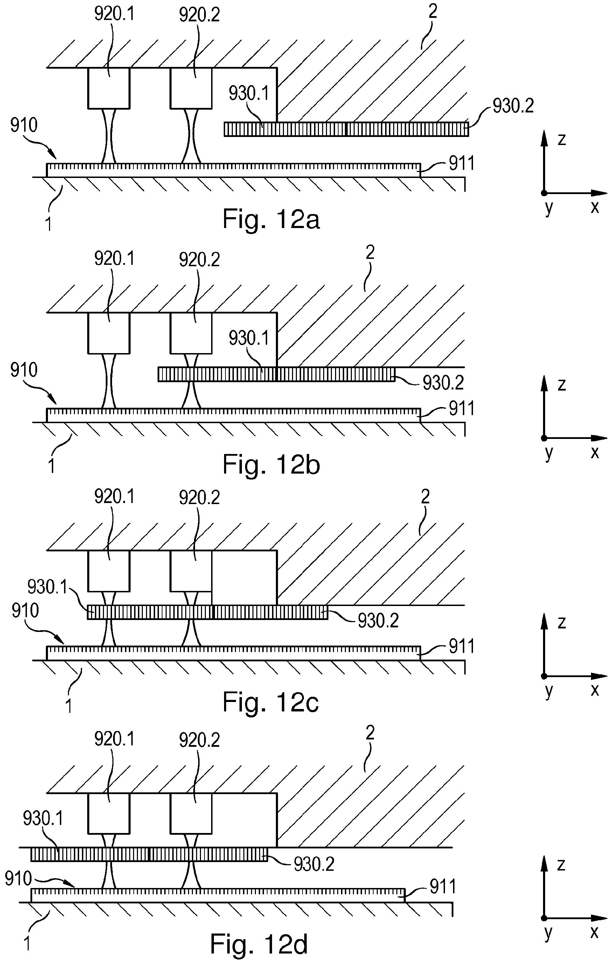

Eine weitere Möglichkeit zur Ausbildung des optischen Ausgleichselements ist im elften Ausführungsbeispiel der erfindungsgemäßen Vorrichtung in den Figuren 12a - 12d veranschaulicht; erläutert werden im Anschluss lediglich die maßgeblichen Unterschiede zu den vorherigen Ausführungsbeispielen.

So sind nunmehr mehrere optische Ausgleichselemente 930.1, 930.2 vorgesehen, die jeweils als diffraktive Elemente bzw. Transmissionsgitter ausgebildet sind. Die Ausdehnung eines Ausgleichselements 930.1, 930.2 entlang der in den Figuren angegebenen Richtung x entspricht hierbei dem Abstand zweier benachbarter Abtasteinheiten 930.1, 930.2 zuzüglich der Breite der jeweiligen Abtaststrahlengänge entlang dieser Richtung. Die einzelnen Ausgleichselemente 930.1, 930.2 werden hierbei schrittweise in die verschiedenen Abtaststrahlengänge der Abtasteinheiten 930.1, 930.2 eingebracht, wobei nach jedem Schritt eine Referenzierung der Abtasteinheiten 930.1, 930.2 erfolgt.

Anhand der Figuren 12a - 12d wird wieder analog zu den vorhergehenden Beispielen erläutert, wie der Arbeitsbereich in Bezug auf eine Verkippung um eine Achse senkrecht zur Messteilung 911 vergrößert wird, also um eine Achse entlang der z-Richtung. Selbstverständlich könnte ein analoges Vorgehen mit mehreren Ausgleichselementen auch genutzt werden, um den Arbeitsbereich bezüglich einer Verkippung um eine Achse senkrecht zur Zeichenebene schrittweise zu vergrößern, d.h. um eine Achse entlang der y-Richtung.

In der Ausgangssituation, dargestellt in Figur 12a, wird über die beiden identisch ausgebildeten Abtasteinheiten 920.1, 920.2 die relative Position der beiden Objekte 1, 2 gemessen. In einem ersten Schritt wird dann wie in Figur 12b veranschaulicht ein erstes Ausgleichselement 930.1 in den Abtaststrahlengang der zweiten Abtasteinheit 920.2 geschoben und im Anschluss die Positionsmessungen beider Abtasteinheiten 920.1, 920.2 gegeneinander referenziert bzw. abgeglichen.

Daraufhin werden die beiden Objekte 1, 2 soweit um eine Achse senkrecht zur Maßverkörperung 910 verdreht bzw. verkippt, bis sich die erste Abtasteinheit 920.1 außerhalb des zulässigen Arbeitsbereichs befindet. Im darauffolgenden Verfahrensschritt, gezeigt in Figur 12c, wird dann das erste Ausgleichselement 930.1 in den Abtaststrahlengang der ersten Abtasteinheit 920.1 geschoben. Dabei bleibt die mit der zweiten Abtasteinheit 920.2 erfolgende Positionsmessung weiterhin gültig und kann zur Initialisierung bzw. Referenzierung der ersten Abtasteinheit 920.1 verwendet werden.

Im nachfolgenden Schritt wird gemäß Figur 12d dann das zweite Ausgleichselement 930.2 in den Abtaststrahlengang der zweiten Abtasteinheit 920.2 geschoben und es kann dabei die Initialisierung mit Hilfe der ersten Abtasteinheit 920.1 erfolgen.

Dieses Vorgehen ist im Gefolge so lange zu wiederholen, bis die gewünschte Verkippung bzw. Verdrehung zwischen den beiden Objekten 1, 2 um eine Achse senkrecht zur Maßverkörperung 910 erreicht ist. Der Arbeitsbereich der Abtasteinheiten 920.1, 920.2 kann auf diese Art und Weise somit beliebig erweitert werden, ohne dass die Referenzierung der Abtasteinheiten 920.1, 920.2 dabei verloren geht.

Zwölftes Ausführungsbeispiel

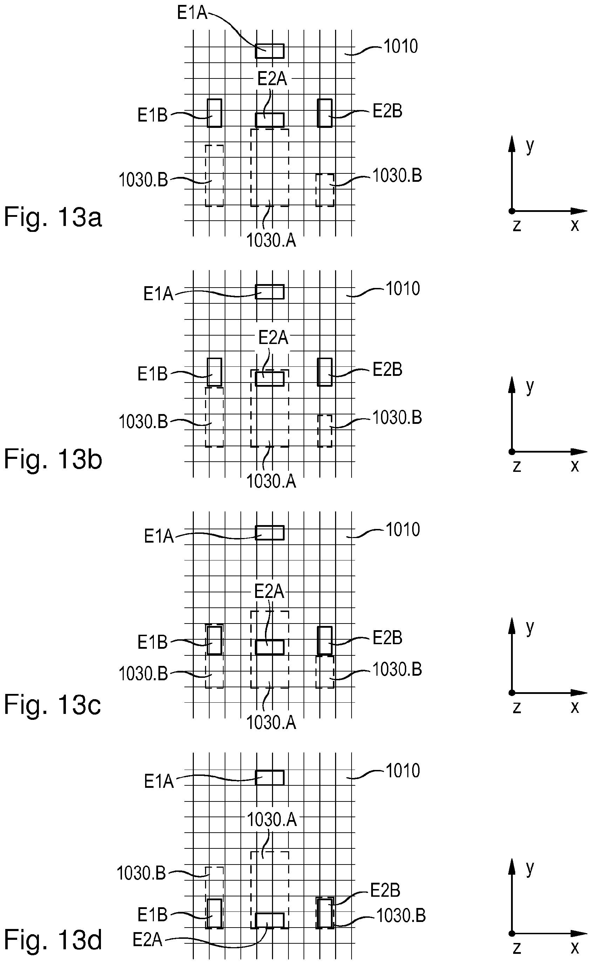

Ein zwölftes Ausführungsbeispiel der vorliegenden Erfindung ist schließlich in den Figuren 13a - 13d stark schematisiert gezeigt.

Um das erfindungsgemäße Konzept zur Arbeitsbereicherweiterung generell anwenden zu können, müssen mehr Abtasteinheiten zur Verfügung stehen, als für die zu bestimmenden Objekt-Freiheitsgrade nötig wären. Aus den verfügbaren Abtasteinheiten kann ein Satz von Abtasteinheiten beliebig gewählt werden, solange dieser Satz in der Lage ist alle relevanten Objekt-Freiheitsgrade zu bestimmen. Der Arbeitsbereich von einer oder mehrerer nicht zu diesem Satz gehörenden Abtasteinheiten können nun mit optischen Ausgleichselementen in Form diffraktiver Elemente verschoben werden.

In Figur 13a ist beispielhaft eine mögliche Anordnung von Abtasteinheiten E1A, E2A, E1B, E2B in einem solchen System gezeigt, wobei die drei zu bestimmenden Maschinen-Freiheitsgrade die relative Verschiebung der Maschinenkomponenten in x- und y-Richtung sowie die relative Drehung um die z-Richtung sind.

Die Längsrichtung der Abtasteinheiten E1A, E2A, E1B, E2B in dieser Figur entsprechen den jeweiligen Abtasteinheit-Messrichtungen. Wie ersichtlich, gibt es somit 2 Abtasteinheiten E1A, E2A, die in x-Richtung, und zwei Abtasteinheiten E1B, E2B, die in y-Richtung messen. Kippungen entlang der x- und y-Richtungen sowie der Abstand der Objekte in z-Richtung können nicht gemessen werden.

Bevor sich das bewegliche Objekt in z-Richtung aus dem Arbeitsbereich der Abtasteinheiten E1A, E2A, E1B, E2B heraus bewegt, werden Ausgleichselemente 1030.A, 1030.B in Form diffraktiver Elemente in die Abtaststrahlengänge eingebracht. Dies geschieht in verschiedenen Schritten, da nur so gewährleistet ist, dass immer ein Satz von Abtasteinheiten E1A, E2A, E1B, E2B die relevanten Objektfreiheitsgrade bestimmen kann.

Im ersten Schritt wird, wie in Figur 13b veranschaulicht, zunächst ein entsprechendes Ausgleichselement 1030.A in den Abtaststrahlengang der Abtasteinheit E2A eingebracht. Die anderen Abtasteinheiten E1A, E1B und E2B sind währenddessen in der Lage alle relevanten Objektfreiheitsgrade zu bestimmen. Nun wird mit diesen Objektfreiheitsgraden der Zähler-Nullpunkt der Abtasteinheit E2A bestimmt und gesetzt.

Im nächsten Schritt wird gemäß Figur 13c zusätzlich ein zweites optisches Ausgleichselement 1030.B in den Abtaststrahlengang der Abtasteinheit E1B eingebracht. Nun bilden die anderen Abtasteinheiten E1A, E2A und E2B einen Satz von Abtasteinheiten, über die wiederum alle relevanten Objektfreiheitsgrade bestimmbar und somit in der Lage sind den Zähler-Nullpunkt der Abtasteinheit E1B zu bestimmen.

Im nächsten Schritt wird gemäß Figur 13d analog in Bezug auf die Abtasteinheit E2B vorgegangen und ein Ausgleichselement 1030.B in den Abtaststrahlengang eingebracht etc..

Da nun die Abtasteinheiten E2A, E1B, E2B mit optischen Ausgleichselementen in Form diffraktiver Elemente ausgestattet sind, können die beiden Objekte jetzt in einen vierten Freiheitsgrad über den Übergabebereich hinaus verkippt werden. Die Zähler-Nullpunkte bleiben dabei erhalten.

Im schematisiert dargestellten Beispiel wurde davon ausgegangen, dass sich alle Ausgleichselemente mit einem gemeinsamen Aktuator in die Abtaststrahlengänge einbringen lassen. Selbstverständlich kann alternativ hierzu vorgesehen sein, pro Abtasteinheit einen separaten Aktuator für das jeweilige Ausgleichselement anzuordnen.

Dreizehntes Ausführungsbeispiel

Das anhand der Figuren 13a - 13d erläuterte zwölfte Ausführungsbeispiel lässt sich grundsätzlich in ein dreizehntes Ausführungsbeispiel abwandeln, das abschließend kurz skizziert wird.

Hierzu wird vorgesehen, dass jede der Abtasteinheiten E1A, E2A, E1B, E2B zusätzlich entlang der z-Richtung messen kann. Dies bedeutet etwa, dass die Abtasteinheit E1A zwei Positionsmesswerte liefert. Einer der Messwerte ist dabei empfindlich bzgl. Verschiebungen entlang der x-Richtung; der andere Messwert ist empfindlich bzgl. Verschiebungen entlang der z-Richtung; analog hierzu etwa die Abtasteinheit E2B empfindlich bzgl. der Richtungen y und z usw..

Im Fall einer derartigen Variante kann dann etwa im ersten Schritt der Satz von Abtasteinheiten E1A, E1B, E2B die Relativpose der Objekte in allen Freiheitsgraden x, y, z, Rx, Ry, Rz ermitteln und - sofern die Zähler-Nullpunkte gültig sind - im Übergabebereich zum Referenzieren der Abtasteinheit E1B verwendet werden. Analog ist dann in den weiteren Verfahrensschritten zur Arbeitsbereichserweiterung vorzugehen.

Neben den vorstehend konkret beschriebenen Ausführungsbeispielen existieren im Rahmen der vorliegenden Erfindung selbstverständlich noch weitere Ausgestaltungsmöglichkeiten.

So ist es etwa grundsätzlich möglich, die in den einzelnen Ausführungsbeispielen erläuterten Maßnahmen wahlweise zu kombinieren.

Desweiteren können grundsätzlich auch verschiedenartig ausgebildete Abtasteinheiten zum Einsatz kommen. Hierbei Dabei können die für die Modifikation der Arbeitsbereiche verwendeten Ausgleichselemente entweder speziell für den jeweiligen Typ der Abtasteinheit optimiert sein oder die gleichen Ausgleichselemente für unterschiedliche Typen von Abtasteinheiten verwendet werden.

Ferner kann ein Teil der Abtasteinheiten von vorne herein einen größeren Arbeitsbereich aufweisen, der ohne zusätzliche Ausgleichselemente beispielsweise den Einrichtbetrieb abdeckt. Für diese Abtasteinheiten braucht man dann keine Ausgleichselemente vorsehen. Die Abtastsignale dieser Abtasteinheiten können bei der Ermittlung der Objekt-Freiheitsgrade mitverwendet werden und ergänzen somit die Positionsinformationen, die bei der Initialisierung weiterer, teilweise erfindungsgemäß mit Ausgleichselementen versehener Abtasteinheiten verwendet werden.

Ergänzend zu den erfindungsgemäß durch Ausgleichselemente modifizierbaren Abtasteinheiten können weitere Abtasteinheiten mit unterschiedlichen Arbeitsbereichen vorhanden sein, denen keine Ausgleichselemente zugeordnet sind.

Ein Teil der restlichen übrigen Abtasteinheiten kann erfindungsgemäß mit ein-oder auswechselbaren Ausgleichselementen versehen werden. Bei der Initialisierung nach dem Aus- oder Einwechseln von Ausgleichselementen werden die Zähler-Nullpunkte der zu initialisierenden Abtasteinheiten dann derart gesetzt, dass alle Abtasteinheiten zusammen konsistent die Positionsinformation bezüglich der Position der zueinander beweglichen Objekte liefern.

**Patentansprüche**

1. Positionsmessanordnung zur Bestimmung der Relativposition zweier Objekte (1, 2), die entlang mindestens einer Messrichtung (x, y) zueinander beweglich angeordnet sind, mit

   - mindestens einer Maßverkörperung (10; 110; 210; 310; 410; 510; 610; 710; 810; 910; 1010), die mit einem der beiden Objekte (1, 2) verbunden ist und mindestens eine Messteilung (11; 311; 411.1, 411.2; 511; 611; 711; 811; 911) aufweist,
   - mindestens zwei Abtasteinheiten (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C), die mit dem anderen der beiden Objekte (1, 2) verbunden und in einer Abstandsrichtung mit einem Abtastabstand (Z) beabstandet von der Maßverkörperung (10; 110; 210; 310; 410; 510; 610; 710; 810; 910; 1010) angeordnet sind, wobei die Abtasteinheiten (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) jeweils optische Abtastelemente umfassen, die zur Ausbildung eines Abtaststrahlengangs dienen, um die Messteilung (11; 311; 411.1, 411.2; 511; 611; 711; 811; 911) optisch abzutasten und darüber positionsabhängige Abtastsignale zu erzeugen,

   **dadurch gekennzeichnet,**
   **dass** mindestens einer Abtasteinheit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) mindestens ein in den Abtaststrahlengang ein- oder auswechselbares optisches Ausgleichselement (30; 130.A, 130.B, 130.C; 230.A, 230.B; 330; 430; 530; 630.1, 630.2, 630.3; 730; 830; 930.1, 930.2; 1030.A, 1030.B) zugeordnet ist, wobei die Positionsmessanordnung das mindestens eine optische Ausgleichselement (30; 130.A, 130.B, 130.C; 230.A, 230.B; 330; 430; 530; 630.1, 630.2, 630.3; 730; 830; 930.1, 930.2; 1030.A, 1030.B) beinhaltet, so dass durch Ein- oder Auswechseln des Ausgleichselements (30; 130.A, 130.B, 130.C; 230.A, 230.B; 330; 430; 530; 630.1, 630.2, 630.3; 730; 830; 930.1, 930.2; 1030.A, 1030.B) eine Veränderung des Arbeitsbereichs bewirkbar ist, der bezüglich der räumlichen Anordnung von Abtasteinheit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) und Maßverkörperung (10; 110; 210; 310; 410; 510; 610; 710; 810; 910; 1010) gegeben ist und in dem die Abtasteinheit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) positionsabhängige Abtastsignale erzeugen kann, wobei die Geometrie des Ausgleichselements (30; 130.A, 130.B, 130.C; 230.A, 230.B; 330; 430; 530; 630.1, 630.2, 630.3; 730; 830; 930.1, 930.2; 1030.A, 1030.B) und dessen Brechungsindex derart gewählt ist, dass sich mindestens einer der modifizierten Arbeitsbereiche mit dem Arbeitsbereich mindestens einer weiteren Abtasteinheit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) in einem Übergabebereich überlappt.

2. Positionsmessanordnung nach Anspruch 1, **dadurch gekennzeichnet, dass** das Ausgleichselement (30; 130.A, 130.B, 130.C; 230.A, 230.B; 330; 430; 530; 630.1, 630.2, 630.3; 730; 830; 930.1, 930.2; 1030.A, 1030.B) derart ausgebildet ist, dass durch Ein- oder Auswechseln des Ausgleichselements (30; 130.A, 130.B, 130.C; 230.A, 230.B; 330; 430; 530; 630.1, 630.2, 630.3; 730; 830; 930.1, 930.2; 1030.A, 1030.B) eine Veränderung des Arbeitsbereichs

   - des Abtastabstands zwischen Maßverkörperung (10; 110; 210; 310; 410; 510; 610; 710; 810; 910; 1010) und Abtasteinheit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) und/oder
   - der winkelmäßigen Orientierung zwischen Maßverkörperung (10; 110; 210; 310; 410; 510; 610; 710; 810; 910; 1010) und Abtasteinheit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) und/oder
   - des Verfahrbereichs zwischen Maßverkörperung (10; 110; 210; 310; 410; 510; 610; 710; 810; 910; 1010) und Abtasteinheit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) bewirkbar ist.

EP 3 443 303 B1

3.  Positionsmessanordnung nach mindestens einem der vorhergehenden Ansprüche, **dadurch gekennzeichnet, dass** als Ausgleichelement (30; 130.A, 130.B, 130.C; 230.A, 230.B; 330; 430; 530; 630.1, 630.2, 630.3; 730; 830; 930.1, 930.2; 1030.A, 1030.B) mindestens eines der nachfolgenden Elemente fungiert:

> - transparente planparallele Platte
> - transparente, keilförmige Platte
> - transparente, schräggestellte planparallele Platte
> - transparente, mehrstufige planparallele Platte
> - transparente, mehrstufige Platte mit unterschiedlichen Keilwinkeln
> - diffraktives Element
> - mehrteiliges System aus einzelnen transparenten planparallelen oder keilförmigen Platten oder schräggestellten planparallelen Platten oder diffraktiven Elementen

4.  Positionsmessanordnung nach mindestens einem der Ansprüche 1 - 3, **dadurch gekennzeichnet, dass** das Ausgleichselement (30; 130.A, 130.B, 130.C; 230.A, 230.B; 330; 430; 530; 630.1, 630.2, 630.3; 730; 830; 930.1, 930.2; 1030.A, 1030.B) mehrere Teil-Ausgleichselemente umfasst.

5.  Positionsmessanordnung nach Anspruch 4, **dadurch gekennzeichnet, dass** das Ausgleichselement (30; 130.A, 130.B, 130.C; 230.A, 230.B; 330; 430; 530; 630.1, 630.2, 630.3; 730; 830; 930.1, 930.2; 1030.A, 1030.B) als integraler Körper, bestehend aus mehreren Teil-Ausgleichselementen ausgebildet ist.

6.  Positionsmessanordnung nach mindestens einem der vorhergehenden Ansprüche, **dadurch gekennzeichnet, dass** die Messteilung als zweidimensionales Kreuzgitter ausgebildet ist, welches eine erste periodische Messteilung umfasst, die sich entlang einer ersten Messrichtung (x) erstreckt und eine zweite periodische Messteilung umfasst, die sich entlang einer zweiten Messrichtung (y) erstreckt, die senkrecht zur ersten Messrichtung (x) orientiert ist.

7.  Positionsmessanordnung nach mindestens einem der vorhergehenden Ansprüche, **gekennzeichnet durch**

> - einen ersten Satz mehrerer Abtasteinheiten (E1A, E1B, E1C), die zur Erfassung mehrerer Bewegungsfreiheitsgrade der beiden beweglichen Objekte ausgebildet sind und
> - einen zweiten Satz mehrerer Abtasteinheiten (E2A, E2B, E2C), die zur Erfassung der gleichen Bewegungsfreiheitsgrade der beiden beweglichen Objekte wie der erste Satz von Abtasteinheiten (E1A, E1B, E1C) ausgebildet sind,
> - wobei in die Abtaststrahlengänge mindestens eines Satzes von Abtasteinheiten (E1A, E1B, E1C, E2A, E2B, E2C) ein oder mehrere Ausgleichselemente (130.A, 130.B, 130.C; 230.A, 230.B; 1030.A, 1030.B) ein- oder auswechselbar sind.

8.  Positionsmessanordnung nach Anspruch 7, **dadurch gekennzeichnet, dass** der Abtaststrahlengang jeder Abtasteinheit (E1A, E1B, E1C, E2A, E2B, E2C) derart ausgebildet ist, dass darüber gleichzeitig die Erzeugung positionsabhängiger Abtastsignale entlang der Abstandsrichtung sowie entlang mindestens einer weiteren Messrichtung erfolgt.

9.  Positionsmessanordnung nach Anspruch 7, **dadurch gekennzeichnet, dass** ein oder mehrere Ausgleichselemente (130.A, 130.B, 130.C; 230.A, 230.B; 1030.A, 1030.B) mittels eines einzigen Aktuators gemeinsam in die Abtaststrahlengänge eines Satzes von Abtasteinheiten (E1A, E1B, E1C; E2A, E2B, E2C) ein- und auswechselbar ist.

10. Verfahren zum Betrieb einer Positionsmessanordnung zur Bestimmung der Relativposition zweier Objekte (1, 2), die entlang mindestens einer Messrichtung (x, y) zueinander beweglich angeordnet sind,

> - wobei die Positionsmessanordnung

>> - eine Maßverkörperung (10; 110; 210; 310; 410; 510; 610; 710; 810; 910; 1010) umfasst, die mit einem der beiden Objekte (1, 2) verbunden ist und mindestens eine Messteilung (11; 311; 411.1, 411.2; 511; 611; 711; 811; 911) aufweist und
>> - mindestens zwei Abtasteinheiten (20.1, 20.2; 320.1, 320.2; 420.1, 420.2; 520.1, 520.2; 620.1, 620.2; 720.1, 720.2; 820 1,920.1; E1A, E1B, E1C, E2A, E2B, E2C) umfasst, die mit dem anderen der beiden Objekte (1, 2) verbunden und mit einem Abtastabstand (Z) beabstandet von der Maßverkörperung (10; 110; 210; 310; 410; 510; 610; 710; 810; 910; 1010) angeordnet sind, und wobei die Abtasteinheiten (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) jeweils optische Abtastelemente aufweisen, über die ein Abtaststrahlengang zur optischen Abtastung der Messteilung (11; 311; 411.1, 411.2; 511; 611; 711; 811; 911) und der Erzeugung positionsabhängiger Abtastsignale ausgebildet wird,

**dadurch gekennzeichnet,**

- **dass** in den Abtaststrahlengang mindestens einer Abtasteinheit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) zeitweise mindestens ein optisches Ausgleichselement (30; 130.A, 130.8, 130.C; 230.A, 230.B; 330; 430; 530; 630.1, 630.2, 630.3; 730; 830; 930.1, 930.2; 1030.A, 1030.B) ein- oder ausgewechselt wird, wobei die Positionsmessanordnung das mindestens eine optische Ausgleichselement (30; 130.A, 130.B, 130.C; 230.A, 230.B; 330; 430; 530; 630.1, 630.2, 630.3; 730; 830; 930.1, 930.2; 1030.A, 1030.B) beinhaltet, so dass durch Ein- oder Auswechseln des Ausgleichselements (30; 130.A, 130.B, 130.C; 230.A, 230.B; 330; 430; 530; 630.1, 630.2, 630.3; 730; 830; 930.1, 930.2; 1030.A, 1030.B) eine Veränderung des Arbeitsbereichs bewirkt wird, der bezüglich der räumlichen Anordnung von Abtasteinheit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) und Maßverkörperung (10; 110; 210; 310; 410; 510; 610; 710; 810; 910; 1010) gegeben ist und in dem die Abtasteinheit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) positionsabhängige Abtastsignale erzeugt und
- **dass** sich nach dem Ein- oder Auswechseln eines oder mehrerer optischer Ausgleichelemente (30; 130.A, 130.B, 130.C; 230.A, 230.B; 330; 430; 530; 630.1, 630.2, 630.3; 730; 830; 930.1, 930.2; 1030.A, 1030.B)
- die Arbeitsbereiche der dadurch modifizierten Abtasteinheiten (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) mit den Arbeitsbereichen mindestens einer der unmodifizierten Abtasteinheiten (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) in einem Übergabebereich überlappen, und
- im Übergabebereich aus den positionsabhängigen Abtastsignalen der unmodifizierten Abtasteinheiten (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) Positionsinformationen ableitbar sind, und
- die modifizierten Abtasteinheiten im Übergabebereich dahingehend initialisiert werden, dass deren positionsabhängige Abtastsignale innerhalb eines vorgegebenen Toleranzbereichs konsistent mit den Positionsinformationen aus den unmodifizierten Abtasteinheiten (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) sind.

11. Verfahren nach Anspruch 10, **dadurch gekennzeichnet, dass** zur Initialisierung die Positions-Zählerwerte der jeweiligen Abtasteinheiten (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) derart gesetzt werden, dass sie innerhalb eines vorgegebenen Toleranzbereichs mit den zu erwartenden Positions-Zählerwerten übereinstimmen, die sich aus den Positionsinformationen derjenigen Abtasteinheiten (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) ableiten lassen, die nicht initialisiert werden und die in ihrem Arbeitsbereich betrieben werden.

12. Verfahren nach Anspruch 10, **dadurch gekennzeichnet, dass**

- mehrere Abtasteinheiten (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) in einem Abtastabstand von der Maßverkörperung angeordnet werden, in dem alle Abtasteinheiten (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) korrekte positionsabhängige Abtastsignale erzeugen und
- dann in die Abtaststrahlengänge eines zweiten Satzes von Abtasteinheiten (E2A, E2B, E2C) mindestens ein Ausgleichselement eingebracht wird, während ein erster Satz von Abtasteinheiten (E1A, E1B, E1C) weiterhin unmodifiziert betrieben wird und
- daraufhin die Positionsbestimmung zunächst über den ersten Satz von Abtasteinheiten (E1A, E1B, E1C) erfolgt und
- in einem Übergabebereich des Abtastabstands, in dem eine Erzeugung von positionsabhängigen Signalen mittels beider Sätze von Abtasteinheiten (E1A, E1B, E1C, E2A, E2B, E2C) möglich ist, der zweite Satz von Abtasteinheiten initialisiert wird und
- nach dem weiteren Vergrößern des Abtastabstands und dem Verlassen des Übergabebereichs die Positionsbestimmung über den zweiten Satz von Abtasteinheiten (E2A, E2B, E2C) erfolgt.

**13.** Verfahren nach Anspruch 12, **dadurch gekennzeichnet, dass**

- anschließend der Abtastabstand zwischen der Maßverkörperung und den Abtasteinheiten (E1A, E1B, E1C, E2A, E2B, E2C) wieder verringert wird; wobei die Positionsbestimmung zunächst über den zweiten Satz von Abtasteinheiten (E2A, E2B, E2C) erfolgt und
- im Übergabebereich des Abtastabstands der erste Satz von Abtasteinheiten (E1A, E1B, E1C) initialisiert wird und dann
- die Positionsbestimmung wieder über den ersten Satz von Abtasteinheiten (E1A, E1B, E1C) erfolgt und dann
- das mindestens eine Ausgleichselement (130.A, 130.B, 130.C; 230.A, 230.B; 1030.A, 1030.B)aus dem Abtaststrahlengang des zweiten Satzes von Abtasteinheiten (E2A, E2B, E2C) entfernt wird und dann
- der zweite Satz von Abtasteinheiten (E2A, E2B, E2C) initialisiert wird.

**Claims**

**1.** Position measurement arrangement for determining the relative position of two objects (1, 2) that are arranged so as to be movable relative to one another along at least one measurement direction (x, y), having

- at least one measurement standard (10; 110; 210; 310; 410; 510; 610; 710; 810; 910; 1010), which is connected to one of the two objects (1, 2) and has at least one measurement graduation (11; 311; 411.1, 411.2; 511; 611; 711; 811; 911),
- at least two scanning units (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C), which are connected to the other one of the two objects (1, 2) and are arranged at a scanning distance (Z) in a distance direction from the measurement standard (10; 110; 210; 310; 410; 510; 610; 710; 810; 910; 1010), wherein the scanning units (20.1 20.2; 320.1, 320.2; 420.1, 420.2; 520.1, 520.2; 620.1, 620.2; 720.1, 720.2; 820.1, 920.1; E1A, E1B, E1C, E2A, E2B, E2C) each comprise optical scanning elements that serve for forming a scanning beam path to optically scan the measurement graduation (11; 311; 411.1, 411.2; 511; 611; 711; 811; 911) and to thereby generate position-dependent scanning signals,

**characterized**
**in that** at least one optical compensation element (30; 130.A, 130.B, 130.C, 230.A, 230.B; 330; 430; 530; 630.1, 630.2, 630.3; 730; 830; 930.1, 930.2; 1030.A, 1030.B) that is interchangeable into or out of the scanning beam path is assigned to at least one scanning unit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C), wherein the position measurement arrangement includes the at least one optical compensation element (30; 130.A, 130.B, 130.C; 230.A, 230.B; 330; 430; 530; 630.1, 630.2, 630.3; 730; 830; 930.1, 930.2; 1030.A, 1030.B), so that it is possible to effect a change in the working region, which is determined with respect to the spatial arrangement of the scanning unit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) and the measurement standard (10; 110; 210; 310; 410; 510; 610; 710; 810; 910; 1010) and in which the scanning unit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) can generate position-dependent scanning signals, owing to the compensation element (30; 130.A, 130.B, 130.C; 230.A, 230.B; 330; 430; 530; 630.1, 630.2, 630.3; 730; 830; 930.1, 930.2; 1030.A, 1030.B) being interchanged in or out, wherein the geometry of the compensation element (30; 130.A, 130.B, 130.C; 230.A, 230.B; 330; 430; 530; 630.1, 630.2, 630.3; 730; 830; 930.1, 930.2; 1030.A, 1030.B) and its refractive index are selected such that at least one of the modified working regions overlaps in a transfer region with the working region of at least one further scanning unit (20.1. 20.2; 320.1, 320.2; 420.1, 420.2; 520.1, 520.2; 620.1, 620.2; 720.1, 720.2; 820.1, 920.1; E1A, E1B, E1C, E2A, E2B, E2C).

**2.** Position measurement arrangement according to Claim 1, **characterized in that** the compensation element (30; 130.A, 130.B, 130.C; 230.A, 230.B; 330; 430; 530; 630.1, 630.2, 630.3; 730; 830; 930.1, 930.2; 1030.A, 1030.B) is embodied such that it is possible to effect a change in the working region

- of the scanning distance between the measurement standard (10; 110; 210; 310; 410; 510; 610; 710; 810; 910; 1010) and the scanning unit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) and/or

- of the angular orientation between the measurement standard (10; 110; 210; 310; 410; 510; 610; 710; 810; 910; 1010) and the scanning unit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) and/or
- of the movement region between the measurement standard (10; 110; 210; 310; 410; 510; 610; 710; 810; 910; 1010) and the scanning unit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) owing to the compensation element (30; 130.A, 130.B, 130.C; 230.A, 230.B; 330; 430; 530; 630.1, 630.2, 630.3; 730; 830; 930.1, 930.2; 1030.A, 1030.B) being interchanged in or out.

3. Position measurement arrangement according to at least one of the preceding claims, **characterized in that** at least one of the following elements functions as the compensation element (30; 130.A, 130.B, 130.C; 230.A, 230.B; 330; 430; 530; 630.1, 630.2, 630.3; 730; 830; 930.1, 930.2; 1030.A, 1030.B):

   - transparent plane-parallel plate
   - transparent, wedge-shaped plate
   - transparent, inclined plane-parallel plate
   - transparent, multistage plane-parallel plate
   - transparent, multistage plate with different wedge angles
   - diffractive element
   - multipart system composed of individual transparent plane-parallel or wedge-shaped plates or inclined plane-parallel plates or diffractive elements.

4. Position measurement arrangement according to at least one of Claims 1 - 3, **characterized in that** the compensation element (30; 130.A, 130.B, 130.C; 230.A, 230.B; 330; 430; 530; 630.1, 630.2, 630.3; 730; 830; 930.1, 930.2; 1030.A, 1030.B) comprises a plurality of partial compensation elements.

5. Position measurement arrangement according to Claim 4, **characterized in that** the compensation element (30; 130.A, 130.B, 130.C; 230.A, 230.B; 330; 430; 530; 630.1, 630.2, 630.3; 730; 830; 930.1, 930.2; 1030.A, 1030.B) is embodied as an integral body consisting of a plurality of partial compensation elements.

6. Position measurement arrangement according to at least one of the preceding claims, **characterized in that** the measurement graduation is embodied as a two-dimensional cross grid comprising a first periodic measurement graduation that extends along a first measurement direction (x) and a second periodic measurement graduation that extends along a second measurement direction (y) and has an orientation that is perpendicular to the first measurement direction (x).

7. Position measurement arrangement according to at least one of the preceding claims, **characterized by**

   - a first set of a plurality of scanning units (E1A, E1B, E1C), embodied for capturing a plurality of degrees of movement freedom of the two movable objects, and
   - a second set of a plurality of scanning units (E2A, E2B, E2C), embodied for capturing the same degrees of movement freedom of the two movable objects as the first set of scanning units (E1A, E1B, E1C),
   - wherein one or more compensation elements (130.A, 130.B, 130.C; 230.A, 230.B; 1030.A, 1030.B) are able to be interchanged into or out of the scanning beam paths of at least one set of scanning units (E1A, E1B, E1C, E2A, E2B, E2C).

8. Position measurement arrangement according to Claim 7, **characterized in that** the scanning beam path of each scanning unit (E1A, E1B, E1C, E2A, E2B, E2C) is formed such that simultaneously the generation of position-dependent scanning signals along the distance direction and along at least one further measurement direction is effected thereby.

9. Position measurement arrangement according to Claim 7, **characterized in that** one or more compensation elements (130.A, 130.B, 130.C; 230.A, 230.B; 1030.A, 1030.B) is or are able to be interchanged together into or out of the scanning beam paths of a set of scanning units (E1A, E1B, E1C, E2A, E2B, E2C) by means of a single actuator.

10. Method for operating a position measurement arrangement for determining the relative position of two objects (1, 2) that are arranged so as to be movable relative to one another along at least one measurement direction (x, y),

- wherein the position measurement arrangement

- comprises a measurement standard (10; 110; 210; 310; 410; 510; 610; 710; 810; 910; 1010), which is connected to one of the two objects (1, 2) and has at least one measurement graduation (11; 311; 411.1, 411.2; 511; 611; 711; 811; 911), and

- comprises at least two scanning units (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C), which are connected to the other one of the two objects (1, 2) and are arranged at a scanning distance (Z) from the measurement standard (10; 110; 210; 310; 410; 510; 610; 710; 810; 910; 1010), and wherein the scanning units (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) each have optical scanning elements that are used to form a scanning beam path for optically scanning the measurement graduation (11; 311; 411.1, 411.2; 511; 611; 711; 811; 911) and generating position-dependent scanning signals,

**characterized**

- **in that** at least one optical compensation element (30; 130.A, 130.B, 130.C; 230.A, 230.B; 330; 430; 530; 630.1, 630.2, 630.3; 730; 830; 930.1, 930.2; 1030.A, 1030.B) is temporarily interchanged into or out of the scanning beam path of at least one scanning unit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C), wherein the position measurement arrangement includes the at least one optical compensation element (30; 130.A, 130.B, 130.C; 230.A, 230.B; 330; 430; 530; 630.1, 630.2, 630.3; 730; 830; 930.1, 930.2; 1030.A, 1030.B), so that a change in the working region, which is determined with respect to the spatial arrangement of the scanning unit (20.1, 20.2; 320.1, 320.2; 420.1, 420.2; 520.1, 520.2; 620.1, 620.2; 720.1, 720.2; 820.1; 920.1; E1A, E1B, E1C, E2A, E2B, E2C) and the measurement standard (10; 110; 210; 310; 410; 510; 610; 710; 810; 910; 1010) and in which the scanning unit (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) generates position-dependent scanning signals, is effected owing to the compensation element (30; 130.A, 130.B, 130.C; 230.A, 230.B; 330; 430; 530; 630.1, 630.2, 630.3; 730; 830; 930.1, 930.2; 1030.A, 1030.B) being interchanged in or out, and

- **in that**, after one or more optical compensation elements (30; 130.A, 130.B, 130.C; 230.A, 230.B; 330; 430; 530; 630.1, 630.2, 630.3; 730; 830; 930.1, 930.2; 1030.A, 1030.B) have been interchanged in or out,

- the working regions of the scanning units (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) modified thereby overlap in a transfer region with the working regions of at least one of the non-modified scanning units (20.1. 20.2; 320.1, 320.2; 420.1, 420.2; 520.1, 520.2; 620.1, 620.2; 720.1, 720.2; 820.1, 920.1; E1A, E1B, E1C, E2A, E2B, E2C), and

- position information is derivable in the transfer region from the position-dependent scanning signals of the non-modified scanning units (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C), and

- the modified scanning units are initialized in the transfer region such that their position-dependent scanning signals are consistent within a specified tolerance range with the position information from the non-modified scanning units (20.1. 20.2; 320.1, 320.2; 420.1, 420.2; 520.1, 520.2; 620.1, 620.2; 720.1, 720.2; 820.1, 920.1; E1A, E1B, E1C, E2A, E2B, E2C).

11. Method according to Claim 10, **characterized in that** for initialization, the position counter values of the respective scanning units (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) are set such that they match, within a specified tolerance range, the expected position counter values that can be derived from the position information of those scanning units (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) that are not initialized and are operated in their working region.

12. Method according to Claim 10, **characterized in that**

- a plurality of scanning units (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) are arranged at a scanning distance from the measurement standard in which all scanning units (20.1, 20.2; 320.1, 320.2; 420.1, 420.2; 520.1, 520.2; 620.1, 620.2; 720.1, 720.2; 820.1, 920.1; E1A, E1B, E1C, E2A, E2B, E2C) generate correct position-dependent scanning signals, and

- then at least one compensation element is introduced into the scanning beam paths of a second set of scanning units (E2A, E2B, E2C), while a first set of scanning units (E1A, E1B, E1C) continues to be operated in a non-modified manner, and

- subsequently the position determination is effected first via the first set of scanning units (E1A, E1B, E1C), and

- the second set of scanning units is initialized in a transfer region of the scanning distance in which generation of position-dependent signals is possible by means of both sets of scanning units (E1A, E1B, E1C, E2A, E2B, E2C), and,
- after further increasing the scanning distance and leaving the transfer region, the position determination is effected via the second set of scanning units (E2A, E2B, E2C).

13. Method according to Claim 12, **characterized in that**

- the scanning distance between the measurement standard and the scanning units (E1A, E1B, E1C, E2A, E2B, E2C) is subsequently reduced again, wherein the position determination is effected first via the second set of scanning units (E2A, E2B, E2C), and
- the first set of scanning units (E1A, E1B, E1C) is initialized in the transfer region of the scanning distance, and then
- the position determination is effected again via the first set of scanning units (E1A, E1B, E1C), and then
- the at least one compensation element (130.A, 130.B, 130.C; 230.A, 230.B; 1030.A, 1030.B) is removed from the scanning beam path of the second set of scanning units (E2A, E2B, E2C), and then
- the second set of scanning units (E2A, E2B, E2C) is initialized.

## Revendications

1. Dispositif de mesure de position destiné à déterminer la position relative de deux objets (1, 2) qui sont disposés de manière mobiles l'un par rapport à l'autre le long d'au moins une direction de mesure (x, y), ledit dispositif comprenant

   - au moins un étalon de mesure (10 ; 110 ; 210 ; 310 ; 410 ; 510 ; 610 ; 710 ; 810 ; 910 ; 1010) qui est relié à l'un des deux objets (1, 2) et au moins une graduation de mesure (11 ; 311 ; 411.1, 411.2 ; 511 ; 611 ; 711 ; 811 ; 911),
   - au moins deux unités de balayage (20.1, 20.2 ; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) qui sont reliées à l'autre des deux objets (1, 2) et disposées de manière à être espacées de l'étalon de mesure (10 ; 110 ; 210 ; 310 ; 410 ; 510 ; 610 ; 710: 810 ; 910 ; 1010) d'une distance de balayage (Z) dans une direction d'espacement, les unités de balayage (20.1, 20.2; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) comprenant chacune des éléments de balayage optiques qui servent à former un trajet de faisceau de balayage pour balayer optiquement la graduation de mesure (11 ; 311 ; 411.1, 411.2 ; 511 ; 611 ; 711 ; 811 ; 911) et, conséquemment, générer des signaux de balayage dépendant de la position,

   **caractérisé en ce que** au moins une unité de balayage (20.1, 20.2 ; 320.1, 320.2 ; 420.1, 420.2 ; 520.1, 520.2 ; 620.1, 620.2 ; 720.1, 720.2 ; 820.1. 920.1 ; E1A, E1B, E1C, E2A, E2B, E2C) est associée à au moins un élément de compensation optique (30 ; 130.A, 130.B, 130.C ; 230.A, 230.B ; 330 ; 430 ; 530 ; 630.1, 630.2, 630.3 ; 730 ; 830 ; 930.1, 930.2 ; 1030.A, 1030.B) qui peut être inséré dans le trajet de faisceau de balayage ou retiré de celui-ci, le dispositif de mesure de position contenant l'au moins un élément de compensation optique (30 ; 130.A, 130.B, 130.C ; 230.A, 230.B ; 330 ; 430 ; 530 ; 630.1, 630.2, 630.3 ; 730 ; 830 ; 930.1, 930.2 ; 1030.A, 1030.B) de sorte que l'insertion ou le retrait de l'élément de compensation (30 ; 130.A, 130.B, 130.C ; 230.A, 230.B ; 330 ; 430 ; 530 ; 630.1, 630.2, 630.3 ; 730 ; 830 ; 930.1, 930.2 ; 1030.A, 1030.B) puisse entraîner une modification de la zone de travail, qui est donnée relativement à la disposition spatiale de l'unité de balayage (20.1, 20.2 ; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) et de l'étalon de mesure (10 ; 110 ; 210 ; 310 ; 410 ; 510 ; 610 ; 710 ; 810 ; 910 ; 1010) et dans laquelle l'unité de balayage (20.1, 20.2; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) peut générer des signaux de balayage dépendant de la position, la géométrie de l'élément de compensation (30 ; 130.A, 130.B, 130.C ; 230.A, 230.B ; 330 ; 430 ; 530 ; 630.1, 630.2, 630.3 ; 730 ; 830 ; 930.1, 930.2 ; 1030.A, 1030.B) et son indice de réfraction étant choisis de telle sorte qu'au moins une des zones de travail modifiées chevauche la zone de travail d'au moins une autre unité de balayage (20.1, 20.2; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) dans une zone de transfert.

2. Dispositif de mesure de position selon la revendication 1, **caractérisé en ce que** l'élément de compensation (30 ; 130.A, 130.B, 130.C ; 230.A, 230.B ; 330 ; 430 ; 530 ; 630.1, 630.2, 630.3 ; 730 ; 830 ; 930.1, 930.2 ; 1030.A, 1030.B) est conçu de telle manière que l'insertion ou le retrait de l'élément de compensation (30 ; 130.A, 130.B, 130.C ; 230.A, 230.B ; 330 ; 430 ; 530 ; 630.1, 630.2, 630.3 ; 730 ; 830 ; 930.1, 930.2 ; 1030.A, 1030.B) puisse entraîner une modification de la zone de travail

- de la distance de balayage entre l'étalon de mesure (10 ; 110 ; 210 ; 310 ; 410 ; 510 ; 610 ; 710 ; 810 ; 910 ; 1010) et l'unité de balayage (20.1, 20.2 ; 320.1, 320.2 ; 420.1, 420.2 ; 520.1, 520.2 ; 620.1, 620.2 ; 720.1, 720.2, 820.1, 920.1 ; E1A, E1B, E1C, E2A, E2B, E2C) et/ou
- de l'orientation angulaire entre l'étalon de mesure (10 ; 110 ; 210 ; 310 ; 410 ; 510 ; 610 ; 710 ; 810 ; 910 ; 1010) et l'unité de balayage (20.1, 20.2 ; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) et/ou
- de la zone de déplacement entre l'étalon de mesure (10 ; 110 ; 210 ; 310 ; 410 ; 510 ; 610 ; 710 ; 810 ; 910 ; 1010) et l'unité de balayage (20.1, 20.2 ; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C).

3. Dispositif de mesure de position selon l'une au moins des revendications précédentes, **caractérisé en ce que** l'élément de compensation (30 ; 130.A, 130.B, 130.C ; 230.A, 230.B ; 330 ; 430 ; 530 ; 630.1, 630.2, 630.3 ; 730 ; 830 ; 930.1, 930.2 ; 1030.A, 1030.B) est l'un au moins des éléments suivants ;

- une plaque transparente plane parallèle
- une plaque transparente en forme de coin
- une plaque transparente plane parallèle et inclinée
- une plaque transparente plane parallèle à plusieurs niveaux
- une plaque transparente à plusieurs niveaux et à différents angles de coin
- un élément diffractif
- un système en plusieurs parties comprenant des plaques individuelles transparentes parallèles planes ou en forme de coin ou de plaques individuelles planes parallèles inclinées ou d'éléments diffractifs individuels.

4. Dispositif de mesure de position selon l'une au moins des revendications 1 à 3, **caractérisé en ce que** l'élément de compensation (30 ; 130.A, 130.B, 130.C ; 230.A, 230.B ; 330 ; 430 ; 530 ; 630.1, 630,2, 630.3 ; 730 ; 830 ; 930.1, 930.2 ; 1030.A, 1030.B) comprend une pluralité de parties d'élément de compensation.

5. Dispositif de mesure de position selon la revendication 4, **caractérisé en ce que** l'élément de compensation (30 ; 130.A, 130.B, 130.C ; 230.A, 230.B ; 330 ; 430 ; 530 ; 630.1, 630.2, 630.3 ; 730 ; 830 ; 930.1, 930.2 ; 1030A, 1030.B) est conçu comme un corps intégral comprenant une pluralité de parties d'élément de compensation.

6. Dispositif de mesure de position selon l'une au moins des revendications précédentes, **caractérisé en ce que** la graduation de mesure est conçue comme un réseau croisé bidimensionnel qui comprend une première graduation de mesure périodique s'étendant le long d'une première direction de mesure (x) et qui comprend une deuxième graduation de mesure périodique s'étendant le long d'une deuxième direction de mesure (y), orientée perpendiculairement à la première direction de mesure (x) .

7. Dispositif de mesure de position selon l'une au moins des revendications précédentes, **caractérisé par**

- un premier ensemble de plusieurs unités de balayage (E1A, E1B, E1C) qui sont conçues pour détecter plusieurs degrés de liberté de mouvement des deux objets mobiles et
- un deuxième ensemble de plusieurs unités de balayage (E2A, E2B, E2C) qui sont conçues pour détecter les mêmes degrés de liberté de mouvement des deux objets mobiles que le premier ensemble d'unités de balayage (E1A, E1B, E1C),
- un ou plusieurs éléments de compensation (130.A, 130.B, 130.C ; 230.A, 230.B ; 1030.A, 1030.B) pouvant être insérés dans les trajets de faisceau de balayage d'au moins un ensemble d'unités de balayage (E1A, E1B, E1C, E2A, E2B, E2C) ou retirés de ceux-ci.

8. Dispositif de mesure de position selon la revendication 7, **caractérisé en ce que** le trajet de faisceau de balayage de chaque unité de balayage (E1A, E1B, E1C, E2A, E2B, E2C) est conçu de façon à générer simultanément des signaux de balayage dépendant de la position suivant la direction d'espacement et suivant au moins une autre direction de mesure.

9. Dispositif de mesure de position selon la revendication 7, **caractérisé en ce qu'**un ou plusieurs éléments de compensation (130.A, 130.B, 130.C ; 230.A, 230.B ; 1030.A, 1030.B) peuvent être insérés conjointement dans les trajets de faisceau de balayage d'un ensemble d'unités de balayage (E1A, E1B, E1C, E2A, E2B, E2C), et être retirés de ceux-ci, au moyen d'un seul actionneur.

10. Procédé de fonctionnement d'un dispositif de mesure de position destiné à déterminer la position relative de deux objets (1, 2) qui sont disposés de manière mobile l'un par rapport à l'autre suivant au moins une direction de mesure (x, y),

- le dispositif de mesure de position comprenant
- un étalon de mesure (10 ; 110 ; 210 ; 310 ; 410 ; 510 ; 610 ; 710 ; 810 ; 910 ; 1010) qui est relié à l'un des deux objets (1, 2) et au moins une graduation de mesure (11 ; 311 ; 411.1, 411.2 ; 511 ; 611 ; 711 ; 811 ; 911) et
- au moins deux unités de balayage (20.1, 20.2 ; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C), qui sont reliées à l'autre des deux objets (1, 2) et qui sont disposées de manière à être espacées de l'étalon de mesure (10 ; 110 ; 210 ; 310 ; 410 ; 510 ; 610 ; 710 ; 810 ; 910 ; 1010) d'une distance de balayage (Z), et

les unités de balayage (20.1, 20.2; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) comportant chacune des éléments de balayage optiques permettant de former un trajet de faisceau de balayage pour le balayage optique de la graduation de mesure (11 ; 311 ; 411.1. 411.2 ; 511 ; 611 ; 711 ; 811 ; 911) et la génération de signaux de balayage dépendant de la position, **caractérisé en ce que**

- au moins un élément de compensation optique (30 ; 130.A, 130.B, 130.C ; 230.A, 230.B ; 330 ; 430 ; 530 ; 630.1, 630.2, 630.3 ; 730 ; 830 ; 930.1, 930.2 ; 1030.A, 1030.B) est temporairement inséré dans le trajet de faisceau de balayage d'au moins une unité de balayage (20.1, 20.2; 320.1, 320.2 ; 420.1, 420.2 ; 520.1, 520.2 ; 620.1, 620.2 ; 720.1, 720.2 ; 820.1. 920.1 ; E1A, E1B, E1C, E2A, E2B, E2C) ou retiré de celui-ci, le dispositif de mesure de position contenant l'au moins un élément de compensation optique (30 ; 130.A, 130.B, 130.C ; 230.A, 230.B ; 330 ; 430 ; 530 ; 630.1, 630.2, 630.3 ; 730 ; 830 ; 930.1, 930.2 ; 1030.A, 1030.B) de sorte que l'insertion ou le retrait de l'élément de compensation (30 ; 130.A, 130.B, 130.C ; 230.A, 230.B ; 330 ; 430 ; 530 ; 630.1, 630.2, 630.3 ; 730 ; 830 ; 930.1, 930.2 ; 1030.A, 1030.B) puisse entraîner une modification de la zone de travail, qui est donnée relativement à la disposition spatiale de l'unité de balayage (20.1, 20.2 ; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) et de l'étalon de mesure (10 ; 110 ; 210 ; 310 ; 410 ; 510 ; 610 ; 710 ; 810 ; 910 ; 1010) et dans laquelle l'unité de balayage (20.1, 20.2; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C)génère des signaux de balayage dépendant de la position, et
- après l'insertion ou le retrait d'un ou plusieurs éléments de compensation optique (30 ; 130.A, 130.B, 130.C ; 230.A, 230.B ; 330 ; 430 ; 530 ; 630.1, 630.2, 630.3 ; 730 ; 830 ; 930.1, 930.2 ; 1030.A, 1030.B)
- les zones de travail des unités de balayage (20.1, 20.2; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) chevauchent les zones de travail d'au moins une des unités de balayage non modifiées (20.1, 20.2; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) dans une zone de transfert et
- des informations de position peuvent être déduites, dans la zone de transfert, des signaux de balayage dépendant de la position des unités de balayage non modifiées (20.1, 20.2 ; 320.1, 320.2 ; 420.1, 420.2 ; 520.1, 520.2 ; 620.1. 620.2 ; 720.1, 720.2 ; 820.1, 920.1 ; E1A, E1B, E1C, E2A, E2B, E2C), et
- les unités de balayage modifiées sont initialisées dans la zone de transfert afin que leurs signaux de balayage dépendant de la position soient cohérents avec les informations de position des unités de balayage non modifiées (20.1, 20.2 ; 320.1, 320.2 ; 420.1, 420.2 ; 520.1, 520.2 ; 620.1, 620.2 ; 720.1, 720.2 ; 720.1, 720.2 ; 820.1, 920.1 ; E1A, E1B, E1C, E2A, E2B, E2C).

11. Procédé selon la revendication 10, **caractérisé en ce que**, pour effectuer l'initialisation, les valeurs de compteur de position des unités de balayage respectives (20.1, 20.2; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) sont réglées de manière à concorder, dans une plage de tolérance prédéterminée, avec les valeurs de compteur de position attendues qui dérivent des informations de position de ces unités de balayage (20.1, 20.2 ; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) qui ne sont pas initialisées et qui fonctionnent dans leur zone de travail.

12. Procédé selon la revendication 10, **caractérisé en ce que**

- une pluralité d'unités de balayage (20.1, 20.2 ; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) sont disposées à une distance de balayage de l'étalon de mesure dans laquelle toutes les unités de balayage (20.1, 20.2 ; 320.1, 320.2 ; 420.1, 420.2 ; 520.1, 520.2 ; 620.1, 620.2 ; 720.1, 720.2 ; 820.1, 920.1 ; E1A, E1B, E1C, E2A, E2B, E2C) génèrent des signaux de balayage corrects dépendant de la position et

- ensuite au moins un élément de compensation est inséré dans les trajets de faisceau de balayage d'un deuxième ensemble d'unités de balayage (E2A, E2B, E2C), tandis qu'un premier ensemble d'unités de balayage (E1A, E1B, E1C) continue à fonctionner sans modification et

- après cela la position est déterminée d'abord par le biais du premier ensemble d'unités de balayage (E1A, E1B, E1C) et

- le deuxième ensemble d'unités de balayage est initialisé dans une zone de transfert de la distance de balayage dans laquelle il est possible de générer des signaux dépendant de la position au moyen des deux ensemble d'unités de balayage (E1A, E1B, E1C, E2A, E2B, E2C), et

- après avoir encore augmenté la distance de balayage et quitté la zone de transfert, la position est déterminée par le biais du deuxième ensemble d'unités de balayage (E2A, E2B, E2C).

13. Procédé selon la revendication 12, **caractérisé en ce que**

- la distance de balayage entre l'étalon de mesure et les unités de balayage (E1A, E1B, E1C, E2A, E2B, E2C) est ensuite à nouveau réduite, la position étant déterminée d'abord par le biais du deuxième ensemble d'unités de balayage (E2A, E2B, E2C) et

- le premier ensemble d'unités de balayage (E1A, E1B, E1C) est initialisé dans la zone de transfert de la distance de balayage, puis

- la position est à nouveau déterminée par le biais du premier ensemble d'unités de balayage (E1A, E1B, E1C) puis

- l'au moins un élément de compensation (130.A, 130.B, 130.C ; 230.A, 230.B ; 1030.A, 1030.B) est retiré du trajet de faisceau de balayage du deuxième ensemble d'unités de balayage (E2A, E2B, E2C), puis

- le deuxième ensemble d'unités de balayage (E2A, E2B, E2C) est initialisé.

Fig. 1a

Fig. 1b

Fig. 1c

Fig. 2

Fig. 3

Fig. 4a

Fig. 4b

Fig. 5

Fig. 6a

Fig. 6b

Fig. 6c

Fig. 7a

Fig. 7b

Fig. 7c

Fig. 8a

Fig. 8b

Fig. 8c

Fig. 9

Fig. 10a

Fig. 10b

Fig. 10c

820.1    820.2

830

811

Fig. 11a

y

z    x

830

811

820.1

820.2

Fig. 11b

y

z    x

820.2

830

811

820.1

Fig. 11c

y

z    x

Fig. 12a

Fig. 12b

Fig. 12c

Fig. 12d

Fig. 13a

Fig. 13b

Fig. 13c

Fig. 13d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2679962 A1

- EP 1762828 A2